# EUROPÄISCHE PATENTSCHRIFT

(11) **EP 1 038 344 B1**
(45) Veröffentlichungstag und Bekanntmachung des Hinweises auf die Patenterteilung: **18.09.2002**
(21) Anmeldenummer: 98938662.8
(22) Anmeldetag: 26.06.1998
(51) Int. Cl.: H02G 3/08

(54) **VORRICHTUNG UND VERFAHREN ZUM HALTEN UND DURCHFÜHREN LÄNGLICHER OBJEKTE**
PROCESS AND DEVICE FOR HOLDING AND THREADING ELONGATE OBJECTS
DISPOSITIF ET PROCEDE PERMETTANT LE MAINTIEN ET LE PASSAGE D'OBJETS ALLONGES

(30) Priorität: 09.12.1997 DE 29721749 U; 18.02.1998 DE 29802818 U
(43) Veröffentlichungstag der Anmeldung: 27.09.2000
(73) Patentinhaber: DSG-Canusa GmbH & Co.KG, D-53340 Meckenheim (DE)
(72) Erfinder: KORTENBACH, Martinus, D-53757 St. Augustin (DE)
(74) Vertreter: Grünecker, Kinkeldey, Stockmair & Schwanhäusser Anwaltssozietät
(86) Internationale Anmeldenummer: EP9803928
(87) Internationale Veröffentlichungsnummer: WO99030398

(56) Entgegenhaltungen:
- DE-A- 19 640 816
- DE-U- 8 813 100

## Beschreibung

Die Erfindung betrifft eine Vorrichtung und ein Verfahren zum Halten und Führen, insbesondere Durchführen länglicher Objekte, vorzugsweise vieladriger Leitungsstränge, vieladriger Mantelleitungen, vieladriger Flachbandleiter- bzw. Flachleiterbandbündel der im Oberbegriff des Anspruchs 1 angegebenen Gattung.

Eine gattungsgemäße Vorrichtung ist bereits aus der DE 196 40 816 A1 bekannt. Diese bekannte Vorrichtung ist entlang einer Mittelebene geteilt und umfaßt zwei bogenförmig ausgebildete Preßelemente, welche im Einsatz ringförmig um das längliche Objekt (Leitungsstrang oder dergleichen) in Eingriff gebracht werden. Mit Hilfe geeigneter Befestigungseinrichtungen können die beiden bogenförmigen Preßelemente mit dem gewünschten Anpreßdruck auf das von ihnen umschlossene längliche Objekt miteinander verbunden werden.

Diese bekannte Vorrichtung eröffnet wegen ihres zweiteiligen Aufbaus für Leitungsstränge und andere vieladrige Leitungsstränge die Möglichkeit einer automatisierten Herstellung, da es bei Verwendung dieser Vorrichtung, sei es zum Halten, Durchführen oder dergleichen, nicht mehr erforderlich ist, die Leitungsstränge in ringförmig geschlossene Gebilde, wie herkömmliche Gummitüllen, Schrumpfschläuche oder dergleichen, einzufädeln.

Seit Beginn der industriellen Herstellung von vieladrigen Leitungssträngen, wie Automobil-Kabelbäumen, ist es stets als unverzichtbar angesehen worden, solche Leitungsstränge von Hand auf sogenannten Formbrettern herzustellen. Im Zeichen der Globalisierung sind deshalb verstärkt Bemühungen festzustellen, die arbeitsintensive herkömmliche Herstellung von z.B. Leitungsstränge in Niedriglohnländer zu verlagern. Wie bereits erwähnt, ist die Hauptursache für den Zwang zur manuellen Herstellung solcher Kabelbäume darin zu sehen, daß die einzelnen Adern oder Leiter eines vieladrigen Leitungsstranges von Hand durch ringförmige Gebilde, wie Gummitüllen, Schrumpfschläuche, Isolierschläuche oder dergleichen, gefädelt werden müssen.

Aus der DE 196 40 816 A1 (Fig. 7) ist es bekannt, die Außenumfänge jedes der beiden Teile der bekannten geteilten Vorrichtung mit einem Teil einer weichen Gummitülle zu umkleiden, so daß die Vorrichtung als Wanddurchführung benutzt werden kann, da der Außenrand der Gummitülle mit dem Innenumfang einer eine Wand durchsetzenden Öffnung in dichtenden Eingriff gebracht werden kann. Die Trennflächen der Gummitülle können bei materialsparenden Ausführungen nicht formstabil sein, was zur Folge hat, daß es bei Einwirkung äußerer Kräfte zu einem zumindest lokalen Öffnen im Bereich der Trennflächen kommt, was die geforderte Fluiddichtigkeit im Bereich der Trennflächen in Frage stellt.

Aus der DE 196 40 816 A1 ist es ferner bekannt, im Bereich der zweigeteilten Vorrichtung mit Hilfe von Butyl den Durchtritt von Flüssigkeiten und Gasen durch Aderzwischenräume (Zwickel) wirkungsvoll zu verhindern. Zum Zwecke dieser im folgenden lediglich als "Längswasserabdichtung" bezeichneten Maßnahme werden die Einzeladern/Leitungen parallel zueinander auf eine Butylschicht eines sogenannten Kleberbandes geklebt und werden die mit diesem Kleberband verbundenen Einzeladern/Leitungen lagenweise in einem Teil der geteilten Vorrichtung angeordnet, so daß die Einzelleitungen bzw. Adern sandwichartig zwischen Butylschichten angeordnet sind. Die zwischen den beiden bogenförmigen Preßelementen der bekannten Vorrichtung ausgebildete Durchtrittsöffnung weist in bezug auf das mit dem Butylkleber versehene Leitungssystem Untermaß auf, so daß beim Zusammenführen der beiden Preßelemente ein gleichmäßiger Druck auf das Leitungsstranges ausgeübt und die gesamten Leitungsstränge fest an die Innenwandung dieser Durchtrittsöffnung angepreßt wird, so daß weder zwischen den Einzeladern/Leitern noch zwischen dem Außenumfang der Leitungsstränge und der Innenoberfläche der zweiteiligen Vorrichtung Flüssigkeiten und/oder Gase hindurchtreten können.

Der Erfindung liegt die Aufgabe zugrunde, verbesserte geteilte Vorrichtungen der im Oberbegriff des Anspruchs 1 genannten Gattung zu schaffen.

Diese Aufgabe wird durch den Gegenstand des Anspruchs 1 gelöst.

Der mit Hilfe der Erfindung erzielbare technische Fortschritt ergibt sich in erster Linie daraus, daß die im folgenden als "Tülle" bezeichnete erfindungsgemäße Vorrichtung wegen ihrer formstabilen, dichtenden Trennflächen in Verbindungsabschnitt und Preßabschnitt in ihrer einfachsten Ausführungsform imstande ist, vieladrige Leitungsstränge oder dergleichen fluiddicht in der gewünschten Position festzuhalten, wobei nicht nur elektrische Leiter, sondern auch medienführende Leitungen mit Hilfe der erfindungsgemäßen geteilten Tülle geführt, gehalten und durchgeführt werden können. Medienführende Leitungen sind beispielsweise dünne Hohlkörper, die Flüssigkeiten, wie Waschflüssigkeiten, Kühlflüssigkeiten und Bremsflüssigkeiten, zu ihren Verwendungsorten führen.

Die erfindungsgemäß gestaltete, geteilte Tülle, die wenigstens einen Preßabschnitt und wenigstens einer sich in Erstreckungsrichtung der länglichen Objekte daran anschließenden Verbindungsabschnitt mit formstabilen, dichtenden Trennflächen aufweist, ist imstande, die bislang gebräuchlichen, ring- oder rohrförmigen, weichen Gummitüllen zu ersetzen, in welche Kabelbündel oder dergleichen nur zeitraubend von Hand eingeführt werden können.

Nach einer bevorzugten Ausführungsform der Erfindung sind die Formstabilität und die Dichtfähigkeit in den Trennflächen des Verbindungsabschnittes dadurch gewährleistet, daß der außen aus einem elastischen Werkstoff (z.B. EPDM/TPE) bestehende Verbindungsabschnitt in seinem Inneren eine aussteifende Einlage, beispielsweise aus PA, aufweist. Dank dieses Aufbaus ist der Verbindungsabschnitt hinreichend formstabil, um den im Betrieb zu erwartenden äußeren Kräften zu widerstehen, so daß es im Bereich der Trennflächen der beiden Verbindungsabschnittshälften (-teile) im Betrieb nicht zu Undichtigkeiten kommt. Der elastische Werkstoff des Äußeren des Verbindungsabschnittes gestattet ein fluiddichtes Verbinden des Außenumfanges der erfindungsgemäßen Tülle mit dem Randbereich einer in einer Wandung ausgebildeten Öffnung und zwar im Prinzip in allen heute bekannten Ausführungen von Tüllen, z.B. Einzieh-, Eindrück- und Einschiebtüllen.

Die vorstehend erörterte bevorzugte Ausführungsform mit einem aussteifenden "Gerippe" im Inneren zumindest des aus dem übrigen in einem elastisch-nachgiebigen Werkstoff bestehenden Verbindungsabschnittes schafft erstmals eine technisch brauchbare, geteilte Gummitülle. Würde man die im Stand der Technik bekannten weichen ring- oder rohrförmigen Gummitüllen der Länge nach auftrennen, so ließen sich die beiden Hälften nicht wieder zuverlässig abdichtend aneinanderfügen, da beim Auftreten äußerer Kräfte unweigerlich undichte Bereiche in den Trennflächen auftreten würden. Mit starren Werkstoffen könnte man gegebenenfalls eine hinreichende Formstabilität erreichen, derartige starre Werkstoffe wären aber nicht imstande, die angestrebte Fluiddichtigkeit zu gewährleisten, welche eines elastischen, weichdichtenden Werkstoffes bedarf.

Das vorstehend erörterte Einbinden eines aussteifenden "Gerippes" aus einem rigiden Kunststoff, beispielsweise PA, in den Verbindungsbereich einer zweigeteilten Tülle bildet die Voraussetzung für die mit Hilfe der Erfindung erreichte technisch brauchbare Teilbarkeit und die mit Hilfe der Erfindung erzielbare Abdichtbarkeit der Tülle.

Weitere bevorzugte Ausführungsformen der Tülle sind in den Unteransprüchen 2 bis 16 beschrieben.

Die beiden erfindungsgemäßen Tüllenteile, im folgenden auch einfach als "Hälften" bezeichnet, befinden sich zum Zeitpunkt des Einbringens eines Leitungsstranges nicht in Anlage aneinander. Nach Einbringen des Leitungsstranges werden die beiden Hälften, welche jeweils einen den Leiterstrang umschließenden Preßabschnitt und eine sich in Längsrichtung an diesen Preßabschnitt anschließenden Verbindungsabschnitt aufweisen im Bereich ihrer Trennebene zusammengefügt. Dieses Zusammenfügen der Trennebenen erfolgt durch Verschrauben, Verrasten, Verklemmen oder auf jede andere geeignete Weise. Das Fixieren des Leiterstranges in der erfindungsgemäßen Tülle erfolgt durch Druckausübung, nachdem die beiden Hälften zusammengefügt sind. Für diese fixierende Druckausübung sind folgende Alternativen vorgesehen:
- leichtes Übermaß des Leitungsstrangdurchmessers in bezug auf den lichten Durchmesser des zwischen den zusammengefügten Preßabschnitten ausgebildeten Durchtrittskanals;
- Vergrößerung des Durchmessers des Leiterstranges durch Ummanteln mit einem geeigneten Material;
- Anordnen einer gummielastischen Auskleidung auf den Innenoberflächen der Durchtrittskanalhälften der beiden Preßabschnitte, wodurch der lichte Durchmesser des Durchtrittskanals druckausübend verminderbar ist;
- Wahl eines flexiblen oder halbflexiblen Werkstoffes für den Durchtrittskanal der Preßabschnitte, wobei gegebenenfalls lediglich in einem der beiden Preßabschnitte ein solcher flexibler bzw. halbflexibler, gummiartiger Werkstoff vorgesehen ist, der bestrebt ist, den Durchmesser des Durchtrittskanals zu verringern.

Hinsichtlich der vorstehend erwähnten "Abdichtbarkeit" sind zwei Fälle zu unterscheiden:
1. die fluiddichte Abdichtung der erfindungsgemäßen Tülle als solcher und
2. die sogenannte Längswasserabdichtung, bei welcher es sich darum handelt, Flüssigkeiten oder Gase daran zu hindern, längs der Oberflächen der einzelnen Adern des Kabel- oder Leitungsstranges bzw. auf deren Isolationshüllen durch die erfindungsgemäße Tülle hindurchzukriechen. "Längswasserdichtigkeit" bezeichnet somit im Rahmen dieser Erfindung die Fähigkeit der erfindungsgemäßen Tülle, den axialen Durchtritt von Fluiden von einer Seite der Tülle zur anderen Seite der Tülle wirksam zu verhindern. Demgegenüber bezieht sich im Rahmen dieser Erfindung der Begriff "fluiddichte Abdichtung" nicht auf Gegebenheiten innerhalb des Leitungsstranges, sondern auf Gegebenheiten außerhalb des Leitungsstranges, insbesondere auf das Abdichten des Außenumfanges des Verbindungsabschnittes, mit welchem die Tülle in einer Wandungsöffnung befestigbar ist.

Bei der erfindungsgemäßen Tülle kann Längswasserdichtigkeit dadurch erreicht werden, daß eine Dichtmasse, vorzugsweise eine Butylmasse, wie in der DE 44 41 513 A1 beschrieben, oder eine andere Dichtmasse, wie ein verpreßbares Gel, ein Fett, eine geeignete Dicht- und Klebemasse, zwischen den Einzeladern bzw. deren Isolationshüllen des Leiterstranges vorgesehen wird, auf welche vom Zusammenfügen der beiden Tüllenhälften an Druck ausgeübt wird. Dieses Ausüben eines (konstanten) Druckes auf die Dichtmasse erfolgt erfindungsgemäß bevorzugt mit Hilfe der folgenden Alternativen:
- Die Preßelementabschnitte haben zumindest im Bereich ihrer Durchtrittskanäle eine gummielastische Auskleidung;
- die Preßelementabschnitte bestehen zumindest im Bereich der Durchtrittskanäle aus einem flexiblen oder halbflexiblen, gummiartigen Kunststoff, wobei gegebenenfalls ein solcher Kunststoff nur in einem der beiden Preßabschnittselemente einer Tülle vorgesehen ist.

Es versteht sich, daß der Durchmesser eines Leitungsstranges vergrößert wird, wenn sich zwischen den Einzeladern des Leiterstranges bzw. zwischen den Isolationshüllen dieser Einzeladern eine Dichtmasse befindet. Ein derart Übermaß aufweisender Leitungsstrang kann positionsgerecht in den Preßabschnittselementen fixiert werden, wenn dieses Preßelement mit zwei gegenüberliegenden Federn versehen ist, die mit einem im gegenüberliegenden Preßabschnitt ausgebildeten Aufnahmetaschen zusammenwirken. Mit Hilfe solcher Federn ist ein zentriertes Zusammenfügen der beiden Tüllenhälften gewährleistet.

Die vorstehend erwähnten Federn dienen nicht nur zum Positionieren und Zentrieren eines Übermaß aufweisenden Leitungsstranges, sondern dienen auch als "Füllstandsanzeiger" zur Sicherstellung eines hinreichenden, auf die Dichtmasse ausgeübten Druckes. Zu diesem Zweck wird ein Leitungsstrang, dessen Durchmesser wegen der im Leitungsstrang enthaltenen Dichtmasse Übermaß aufweist, darauf kontrolliert werden, ob der Leitungsstrangdurchmesser so groß ist, daß er der Höhe der Oberkante dieser Feder entspricht. Ist der Leitungsstrangdurchmesser nicht so groß, daß er die Oberkanten dieser einander gegenüberliegenden Federn erreicht, so kann der Leitungsstrangdurchmesser mit Hilfe von Füllstücken aufgefüttert werden, bis der (aufgefütterte) Leitungsstrangdurchmesser bis zur Federoberkante reicht.

Aus dem Vorstehenden ergibt sich, daß die erfindungsgemäße teilbare Tülle sowohl in allen ihren Trennflächen als auch in ihren Verbindungsbereichen mit einer Wandungsöffnung fluiddicht ist. Nach einer bevorzugten Ausführungsform kann durch Verwendung einer Dichtmasse, gegebenenfalls in Form eines Kleberbandes, Längswasserdichtigkeit herbeigeführt werden. Ferner versteht sich, daß der von den Preßelementen gebildete Bereich nicht nur geradförmig, sondern auch gebogen oder gekrümmt, d.h. beliebig gestaltet, sein kann.

Die erfindungsgemäße Tülle gewährleistet die folgenden wirtschaftlichen Vorteile:

Als Folge der Teilbarkeit fällt das herkömmliche zeitaufwendige und folglich kostenintensive Einfädeln weg. Dadurch sind wiederum die Voraussetzungen geschaffen, um einfache und komplizierte Leitungsstränge, wie Kfz-Kabelbäume, automatisiert zu produzieren. Ferner ermöglicht die Erfindung den Fortfall des Längswasserabdichtens in einem gesonderten Arbeitsgang. Außerdem ist die erfindungsgemäße teilbare Tülle reparatur- und wartungsfreundlich, da beispielsweise bei der Fehlersuche die beiden Hälften der Tülle voneinander gelöst und das Innere der Tülle inspiziert werden kann. Diese erfindungsgemäße geteilte Tülle, die problemlos ein nachträgliches Öffnen gestattet, ermöglicht beispielsweise das spätere Einbringen zusätzlicher elektrischer oder anderer Leitungen wie auch die Entnahme eines ursprünglich vorgesehenen elektrischen oder sonstigen Leiters, ohne daß die Tülle als Ganzes, deren Fluiddichtigkeit oder deren Längswasserdichtigkeit dadurch beeinträchtigt werden.

Die längswasserdichte Variante der erfindungsgemäßen teilbaren Tülle ist imstande, die bislang zu Längswasserabdichtungszwecken benutzten, nicht teilbaren Gummitüllen nebst Wärmeschrumpfschlauch und Abdichtungskomponenten aus Heizschmelzkleber und dergleichen zu ersetzen. Dadurch kann das kostenaufwendige Fädeln von Leiterbündeln oder dergleichen (nämlich durch die herkömmliche Gummitülle und den herkömmlichen Schrumpfschlauch) entfallen.

Hinsichtlich des zu schaffenden Verfahrens wird die eingangs genannte Aufgabe durch den Gegenstand des Anspruchs 17 gelöst.

Der mit Hilfe des erfindungsgemäßen Verfahrens erzielbare technische Fortschritt ergibt sich in erster Linie daraus, daß mit seiner Hilfe längliche Objekte, wie Leitungsstränge, in einer Wandöffnung gehalten und durch eine Wandöffnung hindurchgeführt werden können, wobei eine präzise Positionierung und Fixierung des länglichen Objektes, aber insbesondere ein formstabiles (verwindungssteifes) und fluiddichtes Verbinden der beiden Tüllenhalbschalen gewährleistet wird. Vorteilhafte Ausgestaltungen der Erfindung erlauben das Ausüben eines (konstanten) Druckes auf das längliche Objekt (Leitungsstrang), wobei dieser Druck auf das längliche Objekt ausgeübt wird durch Vorsehen eines leichten Übermaßes des länglichen Objektes oder durch Auffüttern des länglichen Objektes oder durch Vorsehen einer gummielastischen Innenauskleidung in den beiden zu verwendenden Preßabschnitten. Ein solcher auf das längliche Objekt (Leitungsstrang) wirkender, dauernder Druck kann auch ausgeübt werden durch entsprechendes Gestalten der Preßelemente aus einem flexiblen oder halbflexiblen, gummiartigen Kunststoff im Bereich des Durchtrittkanals.

Das erfindungsgemäße Verfahren kann auch so ausgestaltet sein, daß eine Dichtmasse zwischen die Einzeladern bzw. die Einzeladerisolierungen eines Leitungsstranges eingebracht wird. Wird diese Dichtmasse, vorzugsweise Butyl (Butylkautschuk), von dem vorstehend erwähnten Druck beaufschlagt, so wird der Leiterstrang gegen den Durchtritt von Flüssigkeiten oder Gasen abgedichtet mit der Wirkung, daß Flüssigkeiten oder Gase nicht von einer Seite der zu verwendenden zweigeteilten Tülle zur anderen Seite dieser Tülle durchtreten können. Die beim erfindungsgemäßen Verfahren zu verwendende zweigeteilte Gummitülle ist zumindest im Bereich ihrer Trennflächen (Verbindungsflächen) formstabil, d.h. verwindungssteif, und ferner wird bei einer bevorzugten Ausführungsform des erfindungsgemäßen Verfahrens ein im vorstehend angesprochenen bleibenden Druck gewährleistender Durchmesser des länglichen Objektes (Leitungsstranges) gewährleistet, da die zu verwendende zweigeteilte zu diesem Zweck mit geeigneten Füllhöhenindikatoren ausgerüstet ist.

Weitere bevorzugte Ausführungsformen des erfindungsgemäßen Verfahrens sind in den Unteransprüchen 18 bis 24 beschrieben.

Die Erfindung wird im folgenden anhand von Ausführungsbeispielen und unter Bezug auf die Zeichnung näher beschrieben. In dieser zeigt:
- Fig. 1A: eine Zuordnungsdarstellung der Tülle mit zwischen oberer und unterer Halbschale angeordnetem Leitungsstrang,
- Fig. 1B: eine schematische, perspektivische Darstellung einer Tüllenhälfte mit einem Preßabschnitt und einem sich an den Preßabschnitt anschließenden Verbindungsabschnitt,
- Fig. 2: eine Aufsicht auf die in Fig. 1 dargestellte Tüllenhälfte,
- Fig. 3: eine schematische, perspektivische Darstellung der Tüllenhälfte gemäß Fig. 1, wobei der Verbindungsabschnitt teilweise aufgebrochen dargestellt ist,
- Fig. 4: eine schematische, perspektivische Darstellung der Tülle in einer anderen Ausführungsform,
- Figuren 5A und 5B: schematische, perspektivische Darstellungen der beiden halbkugelförmig gestalteten Preßabschnitte der in Fig. 6 und 7 dargestellten Ausführungsform,
- Fig. 6: eine Aufsicht auf die in Fig. 7 im Schnitt dargestellte Ausführungsform,
- Fig. 7: einen Schnitt durch die in den Figuren 4 und 6 dargestellte Ausführungsform,
- Fig. 8A: eine perspektivische Darstellung vieladrigen Leiterstränge (Leitungsstranges) mit einer über eine vorbestimmte Länge der Leiterstränge vorgesehenen partiellen Umwicklung,
- Fig. 8B: einen Schnitt entlang der Linie A-A in Fig. 8A,
- Fig. 9A: eine perspektivische Darstellung einer Hälfte einer bevorzugten Tülle,
- Fig. 9B: eine perspektivische Darstellung der anderen Hälfte der bevorzugten Tülle gemäß Fig. 9A,
- Fig. 10A: eine Aufsicht auf die in Fig. 9A gezeigte Tüllenhälfte,
- Fig. 10B: eine Aufsicht auf die in Fig. 9B gezeigte Tüllenhälfte,
- Fig. 11A: eine perspektivische Darstellung einer Ausgestaltung der Durchtrittsöffnung der erfindungsgemäßen Tülle mit einer quadratischen oder rechteckigen Gestalt zur Aufnahme eines in Fig. 11B perspektivisch dargestellten Flachleiterbündels von quadratischer oder rechteckiger Gestalt,
- Fig. 11B: ein Flachleiterbündel mit quadratischer oder rechteckiger Gestalt,
- Fig. 12: eine perspektivische Darstellung einer erfindungsgemäßen Tülle mit im Verbindungsbereich mit der anderen Tüllenhälfte vorgesehenen Aufnahme- und Dichtungsnuten (für die an der anderen Tüllenhälfte entsprechend vorgesehenen Federn),
- Fig.13: einen schematischen Schnitt durch eine Ausführungsform der erfindungsgemäßen Tülle, wobei der Außenrand des trichterförmigen Verbindungsbereiches mit Gewindeeinrichtungen versehen ist, um eine Schraubverbindung mit einem Wandungsbereich zu ermöglichen,
- Fig. 14: eine schematische Darstellung einer Alternative zu der in Fig. 13 dargestellten Verschraubungsmöglichkeit, wobei in Fig. 14 im Außenumfang des trichterförmigen Verbindungsabschnittes ein teilbarer Ring mit Innengewinde vorgesehen ist, welcher auf ein Außengewinde aufschraubbar ist, welches sich auf dem äußersten, unteren Umfang des trichterförmigen Verbindungsabschnittes befindet,
- Fig. 15: eine Zuordnungsdarstellung analog Fig. 1A einer anderen Ausführungsform mit einem nicht trichterförmigen Verbindungsabschnitt, wobei dieser Verbindungsabschnitt Einrichtungen zum formschlüssigen Verbinden mit einem Wandungsabschnitt oder dergleichen aufweist,
- Figuren 16A und 16B: perspektivische Darstellungen aus verschiedenen Blickwinkeln einer Halbschale des in Fig. 15 veranschaulichten Tüllentyps,
- Figuren 17A und 17B: perspektivische Darstellungen aus verschiedenen Blickwinkeln der anderen Halbschale des in Fig. 15 veranschaulichten Tüllentyps,
- Fig. 18: ein Preßelement, bei welchem die den Durchtrittskanal begrenzende Wandung aus einem flexiblen oder halbflexiblen Werkstoff besteht, und
- Fig. 19: eine Teildarstellung einer oberen Halbschale und einer unteren Halbschale, wobei ein Federclip dargestellt ist, mit dessen Hilfe die beiden Halbschalen miteinander verbindbar sind.

Für alle Ausführungsformen der erfindungsgemäßen Tülle gilt, daß dieselben einen Preßabschnitt aufweisen, welcher mit dem Leiterbündel oder einem anderen länglichen Gebilde in Eingriff bringbar ist, und daß sich in Längsrichtung (Axialrichtung) an diesen Preßabschnitt ein Verbindungsabschnitt anschließt, der mit seinem Außenumfang wenigstens teilweise mit einer Wandung verbindbar ist. Die erfindungsgemäße Tülle ist vorzugsweise entlang einer Mittelebene geteilt, so daß jede Tülle aus zwei miteinander verbindbaren Hälften besteht, die jeweils in einen Teil (beispielsweise eine Hälfte) des Preßabschnittes sowie einen Teil (beispielsweise eine Hälfte) des Verbindungsabschnittes aufweisen. In den dargestellten Ausführungsbeispielen verlaufen die Teilungsebenen des Preßabschnittes sowie des daran anschließenden Verbindungsabschnittes stets in der gleichen Ebene. Es versteht sich jedoch, daß die Teilungsebene des Verbindungsabschnittes verschieden von der Teilungsebene des Preßabschnittes orientiert vorgesehen sein kann.

Die Oberfläche des im Preßabschnitt ausgebildeten Durchtrittskanals kann hart und glatt sein und aus Polyamid bestehen. Alternativ jedoch kann die Oberfläche dieser Durchtrittsöffnung eine zusätzliche Beschichtung aufweisen, vorzugsweise aus einem weichen, elastischen Material, wie EPDM, TPE, wobei die derart beschichtete Oberfläche entweder glatt oder rippenförmig gestaltet ist, wie im folgenden noch näher beschrieben.

Die Verbindungsabschnitte, die dazu dienen, die Preßabschnitte der erfindungsgemäßen Tülle mit einer Wandung, insbesondere einer Wandungsöffnung, abdichtend zu verbinden, sind zumindest im Bereich ihrer Trennflächen (Verbindungsflächen) formstabil (verwindungssteif) und addichtend.

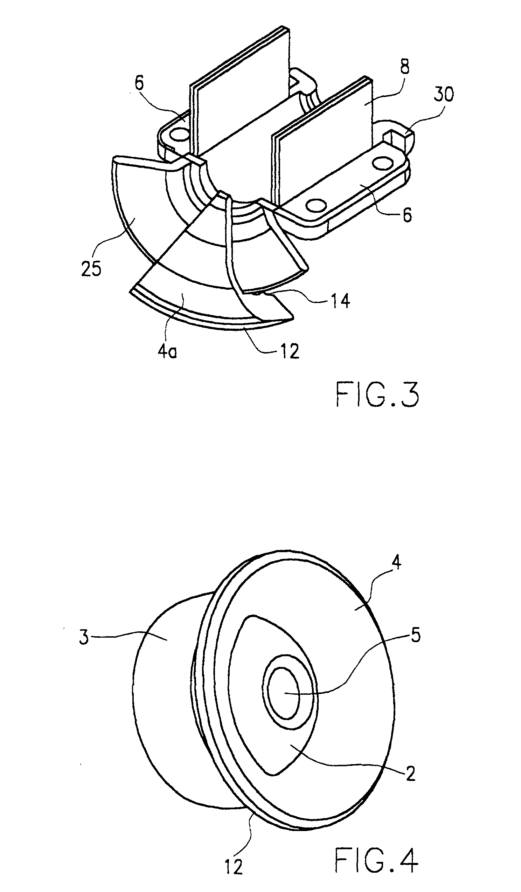

Ein besonderer Vorteil der erfindungsgemäßen Tülle ergibt sich daraus, daß der Verbindungsabschnitt aus einem elastischen Material, wie EPDM, TPE und einem verstärkenden Material, wie Polyamid, aufgebaut ist. Erst durch diese Werkstoffkombination konnte eine verwindungsfreie und dichtende Tülle geschaffen werden, insbesondere durch die in Fig. 3 gezeigte Verstärkung 25 im Verbindungsabschnitt.

In der folgenden Beschreibung werden die Begriffe "Teil" und "Hälfte" synonym für die beiden Halbschalen gebraucht, aus welchen die erfindungsgemäße geteilte Tülle zusammengesetzt ist. Es versteht sich jedoch, daß die beiden Teile einer erfindungsgemäßen Vorrichtung nicht gleich groß sein müssen, da sich grundsätzlich auch ein gewinkelter Trennschnitt durch die Vorrichtung denken läßt, wodurch ein erster größerer Teil- und ein zweiter kleinerer Teilabschnitt entstehen würden.

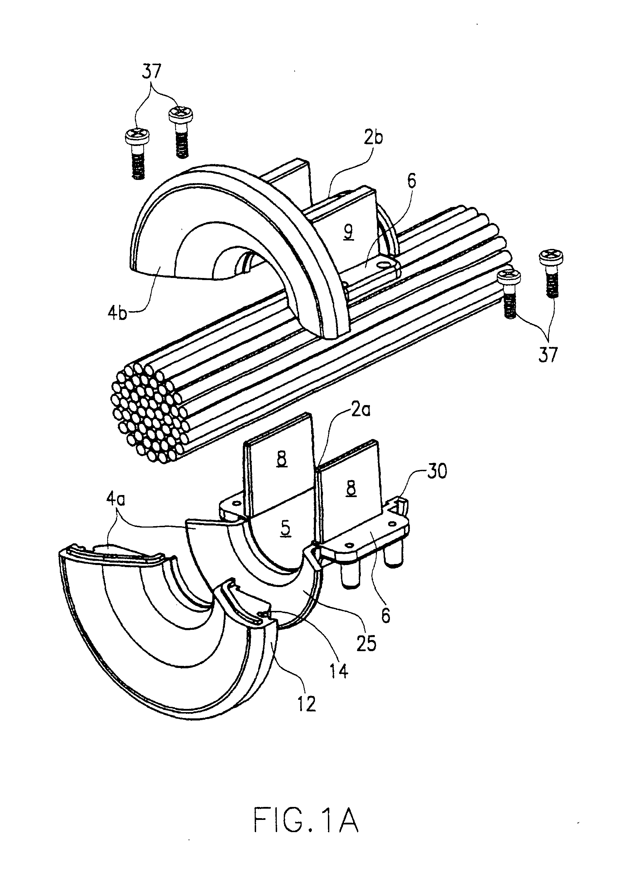

Fig. 1A läßt in Form einer Zuordnungsdarstellung die wesenltichen Teile sowie den Gebrauch einer bevorzugten Ausführungsform der erfindungsgemäßen geteilten Tülle erkennen. Die Tülle besteht aus zwei Hälften (Halbschalen), nämlich einer oberen und einer unteren. Jede Halbschale besitzt ein Preßelement 2a bzw. 2b und ein sich in Längsrichtung daran anschließendes Verbindungsabschnittselement 4a bzw. 4b. Werden die beiden Halbschalen, wie in Fig. 1A angedeutet, miteinander verbunden, so bilden sie einen länglichen Durchtrittskanal 5 und einen sich in Längsrichtung daran anschließenden trichterförmigen Verbindungsabschnitt 4. Ein Leitungsstrang, wie ein Abschnitt eines Kabelbaumes, kann sicher zwischen den beiden Tüllen-Halbschalen aufgenommen werden, wobei im Bereich der Preßelemente ein hinreichend großer Druck auf den Leitungsstrang ausgeübt wird, um denselben sicher zu fixieren. Der formstabil und abdichtend ausgebildete Verbindungsabschnitt 4 kann mit seinem Außenumfang abdichtend mit dem Randbereich einer Durchtrittsöffnung in einer nichtdargestellten Wandung in Eingriff gebracht werden. Der trichterförmige Verbindungsabschnitt 4 besteht aus zwei verschiedenen Werkstoffen. Angrenzend an die Preßelemente besteht der Verbindungsabschnitt aus einem rigiden Kunststoff, wie PA. Dieser festere Werkstoff ist umgeben von einem weich-elastischen Werkstoff, wie EPDM/TPE. Am Außenumfang des weich-elastischen Teils sind eine Rastkante 12 und eine Dichtlippe 14 ausgebildet. In den Trennflächen der Verbindungsabschnitte 4a, 4b ist ein Nut- und Federsystem 16, 18 ausgebildet. Außerdem sind hochstehende Federn 8 und damit zusammenwirkende Aufnahmetaschen 9 dargestellt.

In ihrer Gebrauchsstellung sind die beiden Halbschalen fest, aber im Bedarfsfall lösbar, miteinander verbunden, wobei der Leitungsstrang fest und sicher zwischen den beiden Halbschalen aufgenommen ist.

Unter "Trennflächen" werden im Rahmen dieser Erfindung alle diejenigen Flächen bezeichnet, welche in der Teilungsebene (den Teilungsebenen) der erfindungsgemäßen Tülle angeordnet sind. Insbesondere sind "Trennflächen" stets jene Flächen, mit welchen die beiden Halbschalen im miteinander verbundenen Zustand in Berührungskontakt stehen. Im Bereich des Preßabschnitts bestehen die Trennflächen bevorzugt aus einem rigiden Kunststoff, wie PA, gegebenenfalls beschichtet mit gummielastischen Materialien, wie EPDM/TPE, oder einem Klebstoff. Im Bereich des Verbindungsabschnitts 4 bestehen die Trennflächen jedoch aus dem vorstehend erwähnten elastisch-weichen Werkstoff. Die Trennflächen des Verbindungsabschnittes weisen das Nut- und Federsystem auf, mit dessen Hilfe die beiden Teile des Verbindungsabschnittes formstabil und abdichtend miteinander verbunden werden können.

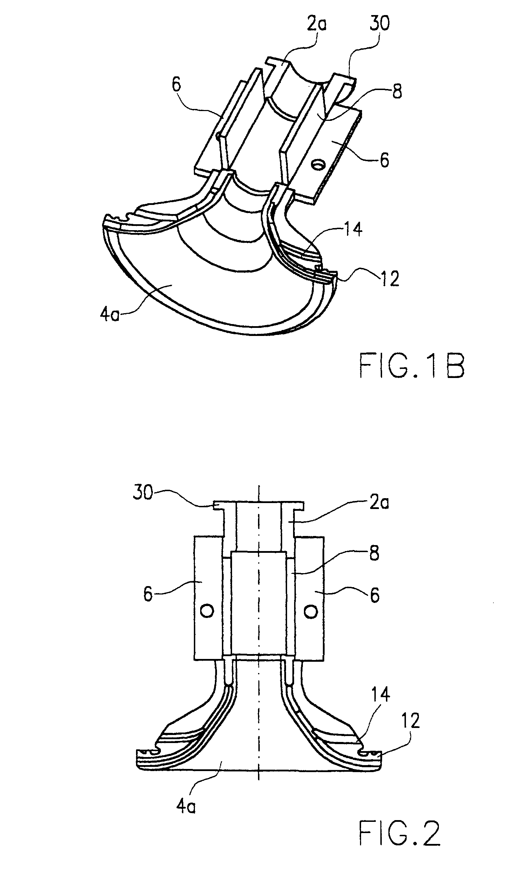

In Fig. 1B ist eine Halbschale einer Ausführungsform der erfindungsgemäßen Tülle, umfassend ein (unteres) Preßelement 2a und ein (unteres) Verbindungsabschnittselement 4a, dargestellt. Hierbei ist das Preßelement 2a in Form eines Rohrelementes ausgebildet. Gleichermaßen ist auch das nicht dargestellte obere Preßelement als Rohrelement ausgebildet, so daß die beiden Preßelemente nach dem Zusammenführen ein vollständiges Rohr mit einem Durchtrittskanal 5 bilden. Die beiden Tüllenteile werden über einander gegenüberliegende Flanschelemente 6 miteinander verbunden, welche sich in der Trennebene der Preßelemente nach außen erstrecken. Nach dem Zusammenführen der Tüllenteile berühren diese sich folglich mit ihren Trennflächen im Bereich der Trennebene und über die einander zugewandten Flächen der Flanschelemente 6. Die Tüllenteile werden über in den Flanschelementen 6 bereitgestellte Bohrungen miteinander verschraubt oder auf eine andere Weise miteinander verbunden, nachdem ein Leiterbündel in den Durchtrittskanal 5 eingelegt worden ist.

Ferner ist jedes Preßelement mit Führungselementen ausgebildet, die ein Ineinandergreifen und Zusammenführen erleichtern. Ein solches Führungselement ist in Fig. 1 B dargestellt. Bei dieser Ausführungsform ist das Preßelement 2a mit Federelementen 8 versehen, welche als eine Verlängerung der Trennfläche des Preßelementes ausgebildet sind. Das nicht dargestellte obere Preßelement ist entsprechend mit Aufnahmetaschen ausgebildet, in welche die Federelemente 8 eingeführt werden. Ferner ist vorgesehen, daß jedes Preßelement 2a an einem Endbereich einen Abschnitt mit einem kleineren Querschnitt aufweist, um zusätzlich Druck auf das einzulegende Kabelbündel auszuüben, um einem Austritt von Butyl entgegenzuwirken. Außerdem wurde dieser Bereich mit einer Hinterschneidung (30) versehen, die es erlaubt, z.B. flexible, geschlitzte Wellrohre zum Schutz des Leitungsstranges anzukuppeln.

Jedes Preßelement ist an einer Seite einstückig mit einem Verbindungsabschnittselement 4a ausgebildet, welches die Form einer Trichterhälfte aufweist. Hierbei ist der engere Trichterbereich dem Preßelement zugeordnet, während der sich erweitemde Trichterbereich von diesem abgewandt ist. Das Verbindungsabschnittselement ist an dem nicht dargestellten oberen Preßelement gegengleich ausgebildet, so daß diese beiden Elemente beim Zusammenfügen der beiden Halbschalen einen vollständigen trichterförmigen Verbindungsabschnitt 4 bilden.

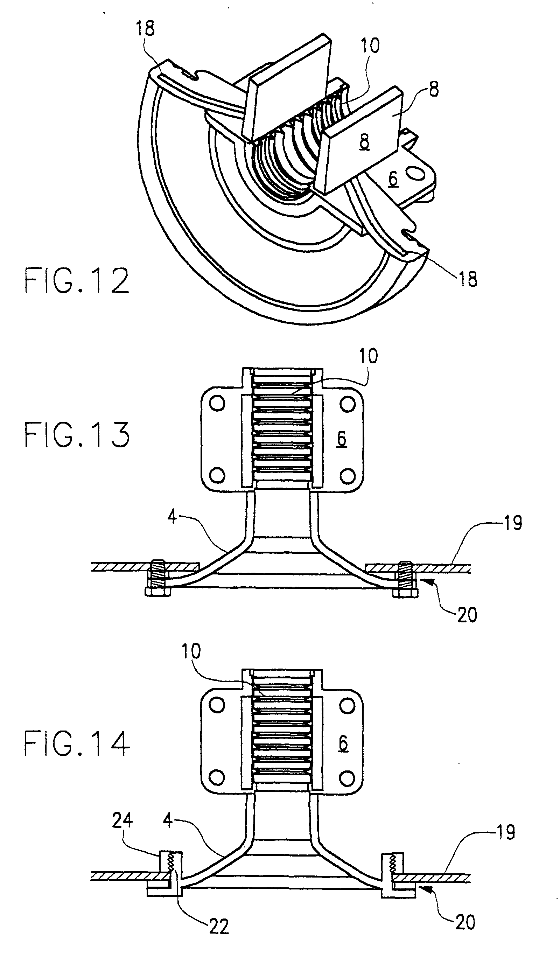

Vorzugsweise sind auch die Trennflächen der Verbindungsabschnittselemente 4a mit Nut und Feder (Fig. 12) ausgebildet, um ein fluiddichtes Verbinden der beiden Elemente zu gewährleisten und gleichzeitig eine festere Verbindung dieser Elemente zu ermöglichen. Die Trennflächen können ferner mit einem Klebstoff benetzt werden, um eine besonders feste Verbindung bereitzustellen. Gele, Fette und dgl. können benutzt werden, um die Fluiddichtigkeit dieser Verbindung abzusichern.

Der Aufbau des trichterförmigen Verbindungsabschnittselementes 4a ist in Fig. 3 dargestellt. Das Element 4a weist im Inneren ein Verstärkungselement 25 auf. Dieses Verstärkungselement ist einstückig mit dem vorzugsweise aus PA bestehenden Preßelement 2a ausgebildet und erstreckt sich um ein vorbestimmtes Maß in das trichterförmige Gebilde hinein. Durch das Verstärkungselement wird eine notwendige Steife des Trichters in dem engeren Trichterbereich erzielt, während der sich erweiternde, äußere Trichterbereich flexibel ausgestaltet ist und vorzugsweise aus EPDM/TPE besteht, damit sich die hier vorgesehene Hinterschneidung mit normal üblichem Kraftaufwand verrasten läßt. Diese Steifigkeit ist eine notwendige Voraussetzung für das Erzielen von Verwindungssteifigkeit in der Trennebene, ohne die sich keine Wasserdichtigkeit im Bereich der Trennebene erreichen läßt.

Gemäß Fig. 2 ist an der Außenseite des Verbindungsabschnittselementes 4a an dem sich erweiternden Trichter eine Rastkante 12 ausgebildet, welche mit einer Dichtlippe 14 zusammenwirkt. Im Einsatz wird der trichterförmige Verbindungsabschnitt 4 mit seinem Außenumfang in eine entsprechende Wandungsöffnung eingesetzt, deren nicht dargestellter Rand zwischen Rastkante 12 und Dichtlippe 14 dichtend gehalten wird.

Fig. 4 zeigt schematisch eine andere Ausführungsform. Hierbei bilden die beiden Preßelemente Halbkugelelemente, welche an einer nicht dargestellten Trennfläche zu einer Kugel zusammengefügt wurden. Die beiden Preßelemente sind in einer Schale 3 (vgl.

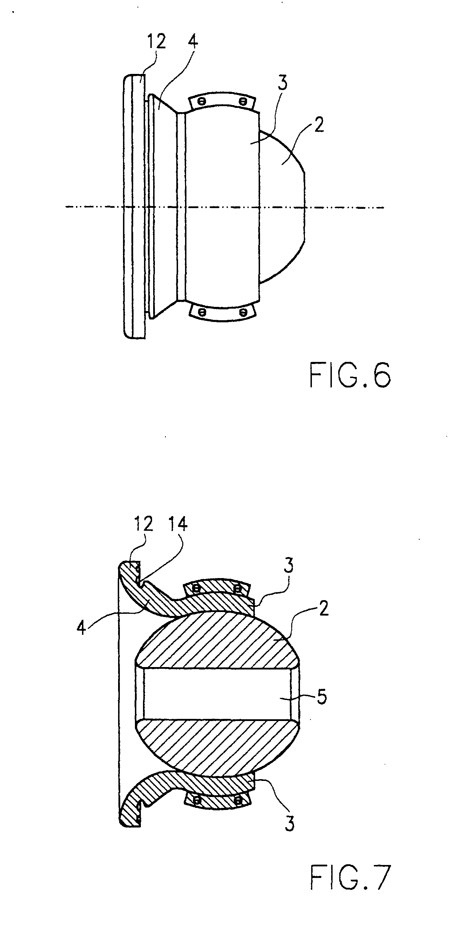

Fig. 7) gelagert, die eine Drehbewegung der Kugel innerhalb der Schale ermöglicht. Die Schale ist ferner einstückig mit einem trichterförmigen Verbindungsabschnitt 4 ausgebildet, wobei der sich erweiternde Trichterbereich von der Schale 3 abgelegen ausgebildet ist.

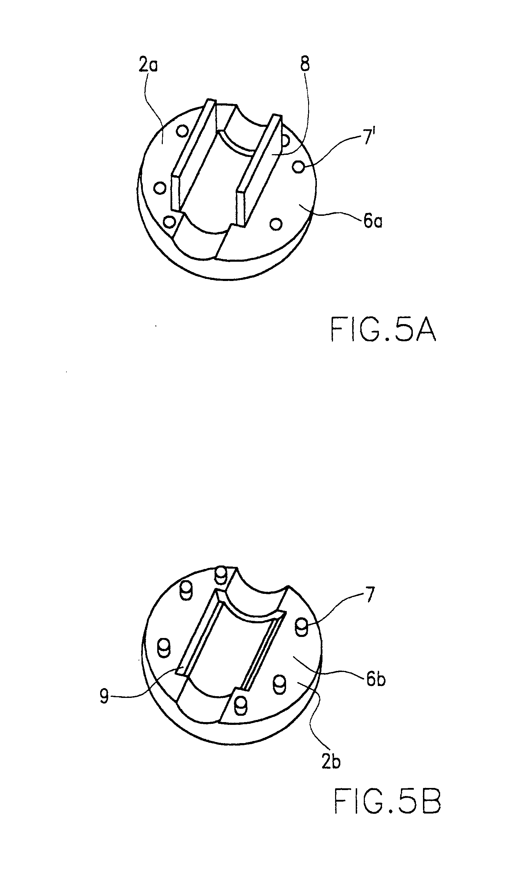

Der genaue Aufbau der Preßelemente 2a, 2b der Ausführungsform gemäß Fig. 4, 6 und 7 wird aus den Figuren 5A und 5B deutlich. Wie dargestellt, ist jedes der Preßelemente als Halbkugel ausgebildet, wobei die Trennflächen 6a, 6b im Einsatz zusammengeführt werden, um eine Kugel auszubilden. Die Trennflächen der Halbkugeln weisen jeweils eine nutartig ausgebildete Aussparung auf, die sich über die ganze Fläche bis zu den halbrunden Kugelflächen erstreckt. Die beiden Preßelemente werden im Einsatz so miteinander verbunden, daß diese Aussparungen zusammen einen Durchtrittskanal 5 bilden, der mittig in der entstehenden Kugel angeordnet ist.

Um das Zusammenführen der beiden Preßelemente zu vereinfachen, sind auf den Trennflächen 6a, 6b ferner Zentrierungselemente vorgesehen. Wie dargestellt, weist eines der Preßelemente im Bereich der Trennfläche 6a Vorsprünge 7 auf. Entsprechend ist die Trennfläche 6b mit Ausnehmungen 7' versehen, die in Abmessung und Anordnung den Vorsprüngen 7 entsprechen. Im Einsatz greifen die Vorsprünge 7 des Preßelementes 2a in die Aussparungen 7' des Preßelementes 2b ein, so daß die beiden Teile quasi ineinanderrasten. Darüber hinaus sind die Preßelemente 2a, 2b noch mit seitlichen Führungselementen ausgebildet, welche im Einsatz das Leiterbündel bei der Verpressung führen. Zu diesem Zweck sind auf den Trennflächen 6b des Preßelementes 2b unmittelbar an beide Längsseiten der Durchtrittsöffnungsnut angrenzend Führungselemente 8 ausgebildet, die sich in Form von Federn in etwa senkrecht zu der Trennfläche erstrecken. Das andere Preßelement 2a ist gleichermaßen auf den Trennflächen 6a mit unmittelbar an die Längsseiten der Durchtrittsöffnungsnut angrenzenden Nuten oder Taschen 9 versehen, die in Form und Größe den Federn 8 entsprechen. Im Einsatz greifen die Federn und Nuten oder Taschen ineinander und gewährleisten neben einer zusätzlichen Führung des Leiterbündels ein besseres Verrasten der beiden Preßelemente.

Nach Einlegen eines Leitungsstranges und dem Zusammensetzen der beiden Preßelemente 2a, 2b werden diese von außen durch bereitgestellte Bohrungen verschraubt. Gleichermaßen können die beiden Elemente jedoch auch über Klebstoffe, Nieten oder andere formschlüssige Verbindungsverfahren verbunden werden. Die zusammengefügten Preßelemente werden anschließend von zwei an den engeren Trichterbereichen ausgebildeten aufgenommen, welche zusammen eine Kugelschale 3 bilden. Die Abmessungen der Kugelaußenfläche und der Innenseite der Halbschale sind hierbei so gewählt, daß sich die aus den Elementen 2a und 2b gebildete Kugel in der Halbschale bewegen kann. Jede Halbschale ist vorzugsweise so ausgebildet, daß nur ca. die Hälfte der Kugelfläche von der Halbschale abgedeckt wird, so daß die Öffnungsbereiche des Durchtrittskanals 5 der Kugel freiliegen. Die beiden Halbschalen werden anschließend über eine Schraubverbindung oder durch Nieten miteinander verbunden.

Jede Halbschale ist einstückig mit einer Hälfte eines trichterförmigen Verbindungsabschnittes 4 ausgebildet, wobei der sich erweiternde Trichterbereich von der Halbschale abgewandt ist (Fig. 6). Der äußere, sich erweiternde Trichterbereich ist an seiner Außenseite mit einer Rastkante 12 versehen, die nach außen um den ganzen Umfang des Trichters verläuft. In unmittelbarer Nähe zu der Rastkante 12 ist an der Außenseite des Trichters ein Vorsprung ausgebildet, der sich ebenfalls über den gesamten Umfang des Trichters erstreckt. Im Einsatz wird der Trichter über die Rastkante 12 und den benachbarten Vorsprung in Öffnungen von dünnwandigen Konsolen oder Wandplatten befestigt. Hierbei ist die Rastkante an der einen Seite und der Vorsprung an der anderen Seite der Wandungsöffnung angeordnet.

Die Preßelemente 2a, 2b sind vorzugsweise aus Polyamid hergestellt. Gleichermaßen bestehen auch die Versteifungen 25 vorzugsweise aus Polyamid. Die Außenhülle des Trichters besteht vorzugsweise aus EPDM, TPE, welches um das Verstärkungselement 25 herum vorgesehen ist.

Zur Ingebrauchnahme wird zunächst in die Durchtrittsöffnung eines der Preßelemente 2a, 2b ein Leiterbündel eingelegt, wobei das Leiterbündel Übermaß bezüglich des Durchtrittsöffnungsdurchmessers aufweist. Das Leiterbündel besteht aus vorbereiteten und, soweit Längswasserdichtigkeit gewünscht, in Kleber eingebetteten Leitern, insbesondere aus einer Vielzahl von Einzeladern bzw. Einzelleitern, die auf einem Kleberband solchermaßen angeordnet sind, daß die Einzeladern bzw. Leitern sandwichartig zwischen den einzelnen Schichten des Kleberbandes angeordnet sind. Die aktiven Schichten dieses Kleberbandes bestehen vorzugsweise aus Butyl (Butylkautschuk).

Anschließend werden die beiden Preßelemente 2a, 2b zusammengeführt, und auf das eingelegte Kabelbündel wird Druck ausgeübt. Ist kein Butyl oder dergleichen zwischen die Einzeladern/Leiter eingebracht, so werden diese Leiter allein durch den von den beiden Preßelementen des Preßabschnittes ausgeübten Druck gehalten und geführt. Ist jedoch ein Material, wie Butyl, zwischen den Leitern und zwischen den Leitern und der der Innenwandung der Durchtrittsöffnung vorhanden, wird auch eine Längswasserabdichtung erzielt, so daß keine Feuchtigkeit auf den Einzeladern/Leiter entlanglaufen kann. Diese mit Hilfe von Butyl oder dergleichen herbeigeführte Abdichtung ist auch gasdicht.

Der sich erfindungsgemäß an den zweigeteilten Preßabschnitt anschließende zweigeteilte Verbindungsabschnitt erlaubt eine fluiddichte Durchführung beispielsweise eines Kabelbündels durch eine Wandungsöffnung. Wie bereits beschrieben, wirkt der Außenumfang des trichterförmigen Verbindungsabschnittes fluiddicht mit dem die Durchtrittsöffnung umgebenden Wandungsabschnitt zusammen, so daß Feuchtigkeit als Folge der Längswasserabdichtung nicht durch das Leiterbündelinnere und als Folge der fluiddichten Abdichtung im Bereich des Außenumfanges des Verbindungsabschnittes nicht durch die Wandungsöffnung sich ausbreiten kann. Wie bereits erwähnt, werden die beiden Preßelemente des Preßabschnittes durch eine Nut- und Federverbindung und werden auch die beiden Verbindungsabschnittselemente des trichterförmigen Verbindungsabschnittes durch eine Nut- und Federverbindung formschlüssig miteinander verbunden, nachdem das Kabelbündel oder ein anderes längliches Objekt in die eine Hälfte der geteilten Vorrichtung hineingelegt und die andere Hälfte benutzt wird, um die Vorrichtung zu schließen.

Zur Ausführungsform gemäß Figuren 4 bis 7 sei noch bemerkt, daß das zu einer Kugel zusammengefügte Preßelement 2 innerhalb der sie haltenden Schalenelemente 3 in verschiedene Richtungen bewegbar ist, so daß im Gegensatz zur Ausführungsform gemäß Figuren 1 bis 3 die Richtungsorientierung des Durchtrittskanals 5 variabel ist.

Wie bereits erwähnt, erfüllt die erfindungsgemäße Vorrichtung in ihrer Funktion als "Tülle", also als "trichterförmiger Körper aus isolierendem Material zur Durchführung elektrischer Leitungen durch Wände oder zur Einführung in elektrische Geräte" eine Doppelfunktion. Einerseits gewährleistet die Tülle ein Abdichten der vom Kabelbündel (Leitungsstrang) durchsetzten Wandöffnung, da der vorzugsweise elastisch gestaltete äußere Rand des trichterförmigen Verbindungsabschnittes abdichtend mit der Umfangswandung der Öffnung verbindbar ist. Andererseits gewährleisten die Druck ausübend auf das Kabelbündel wirkenden Umfangsflächen des Durchtrittes des sich an den Verbindungsabschnitt in Längsrichtung anschließenden Preßabschnittes ein verrutschsicheres Festhalten des Kabelbündels in dieser Durchtrittsöffnung. Falls Butyl oder ein äquivalentes Material zwischen den Einzeladem bzw. Einzelleitern vorgesehen ist, wird obendrein eine Längswasserdichtigkeit sowohl zwischen den einzelnen Adern bzw. Einzelleitern des Kabelbündels als auch zwischen der Außenoberfläche des Kabelbündels und der Innenoberfläche der Durchtrittsöffnung erreicht.

Erfahrungsgemäß neigen jedoch Dichtungsmaßnahmen unter Verwendung von Butyl oder anderen geeigneten Dichtungsmassen dazu, im Verlaufe der Zeit zu verspröden und geringfügig zu schwinden. Ein solches Schwinden führt jedoch zu einer Beeinträchtigung der Abdichtung des Kabelbündels, sofern diesem Schwindungsverhalten nicht Rechnung getragen wird. Mit Hilfe der im folgenden insbesondere anhand der Figuren 9A, 9B, 10A und 10B, 11A, 12 bis 14, 16 bis 18 beschriebenen Ausführungsform läßt sich das Schwinden von Butyl oder dergleichen "selbstheilend" kompensieren.

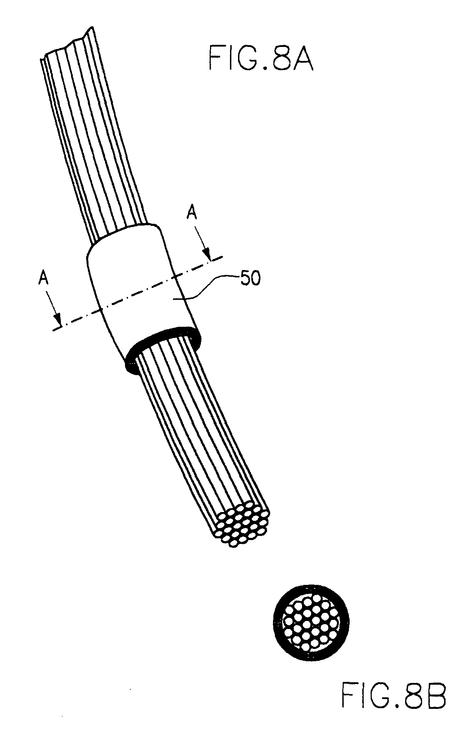

In Fig. 8A ist perspektivisch ein längliches Objekt in Form eines Abschnittes eines Leitungsstranges dargestellt. Dieser Leitungsstrang besteht bekannterweise aus einer Vielzahl von Adern, welche jeweils mit einem Kunststoff voneinander isoliert sind. Ein ausgewählter Abschnitt der Leitungsstrangoberfläche ist mit einer Ummantelung 50 versehen, die beispielsweise in Form wenigstens einer Wicklung um den Leiterstrang herumgeführt ist, um dessen Querschnitt zu vergrößern. Auf diese Weise kann in einem vorbestimmten Abschnitt der Oberfläche des Leitungstranges dessen Umfang auf ein angestrebtes Maß vergrößert werden. In Zusammenschau mit der im folgenden noch näher zu beschreibenden Ausführungsform der Tülle nach der Erfindung kann eine solche Durchmesservergrößerung sehr zweckmäßig sein. Ist beispielsweise der Außenumfang des Leitungsstranges nicht hinreichend groß, um in der erfindungsgemäßen Tülle verrutschfest gehalten zu werden, so kann durch Ummantelung bzw. Umwicklung eines ausgewählten Abschnittes des Leitungsstranges dessen Durchmesser soweit erhöht werden, daß dann der Durchmesser des Durchtrittskanals der Tülle zu dem mit der Ummantelung versehenen Leitungsstrangabschnitt Untermaß aufweist, so daß nach dem Einfügen des ummantelten Leitungsstrangabschnittes dieser mit Preßsitz verrutschfest in der Tülle gehalten ist.

Es versteht sich, daß das Vergrößern des Leitungsstrangumfanges prinzipiell mit allen geeigneten Maßnahmen herbeigeführt werden kann.

In Fig. 8B ist ein Schnitt entlang der Linie A-A in Fig. 8A dargestellt, welcher die erreichte Umfangsvergrößerung des Leitungsstranges als Folge der Ummantelung 50 erkennen läßt. Es versteht sich, daß allein durch die in den Figuren 8A und 8B gezeigten Maßnahmen keine Längswasserdichtigkeit im Bereich der Ummantelung 50 erzielt werden kann, da diese Umwicklung 50 keinen Einfluß auf die Zwischenräume zwischen benachbarten Adern des Leitungsstranges ausübt.

Die den Preßabschnittselementen zugeordneten vorspringenden Federn 8 dienen in erster Linie zur Führung des in die Tüllenhälften einzulegenden Kabelbündels. Sie können jedoch bei geeigneter Dimensionierung auch als Füllhöhenindikator dienen, um bei der Montage den angestrebten Durchmesser des einzulegenden Kabelbündels zu überwachen. Sollte sich dabei herausstellen, daß das Kabelbündel einen zu geringen Durchmesser aufweist, so kann zusätzlich ein aus der DE 196 40 816 A1 bekanntes Füllstück benutzt werden, um den Gesamtdurchmesser des Kabelsystems im Bereich der Tülle auf das gewünschte Maß zu vergrößern.

Die vorstehend genannten Füllstücke dienen zu einer örtlichen Vergrößerung des Leiterbündelumfanges, falls der ursprüngliche Leiterbündelumfang nicht ausreicht, um innerhalb der erfindungsgemäßen Tülle den erforderlichen Anpreßdruck beim Zusammenfügen der beiden Tüllenhälften zu gewährleisten. Diese Füllstücke bestehen vorzugsweise aus einem elastisch-nachgiebigen Material, wie z.B. EPDM. Halbflexible Kunststoffe, wie z.B. PE und PVC, haben sich jedoch auch für diesen Zweck bewährt. Außerdem hat es sich als vorteilhaft herausgestellt, diese Füllstücke mit einer Ummantelung zu versehen, welche vorzugsweise eine klebrige und somit dichtende Wirkung hat. Hierfür hat sich Butyl besonders bewährt. Solche mit Butyl ummantelten Füllstücke sind vorzugsweise sandwichartig zwischen Trennpapier zu fassen und auf die gewünschte Größe zurechtzuschneiden.

Bei Verwendung der Federn 8 als Füllhöhenindikator wird gewährleistet, daß der für eine einwandfreie und dauerhafte Längswasserdichtung eines Leiterbündels erforderliche Druck innerhalb der Tülle erzeugt werden kann. Das für eine Längswasserdichtung besonders bevorzugte Butylkleberband wird vorzugsweise in einem Temperaturbereich um 60 °C verarbeitet.

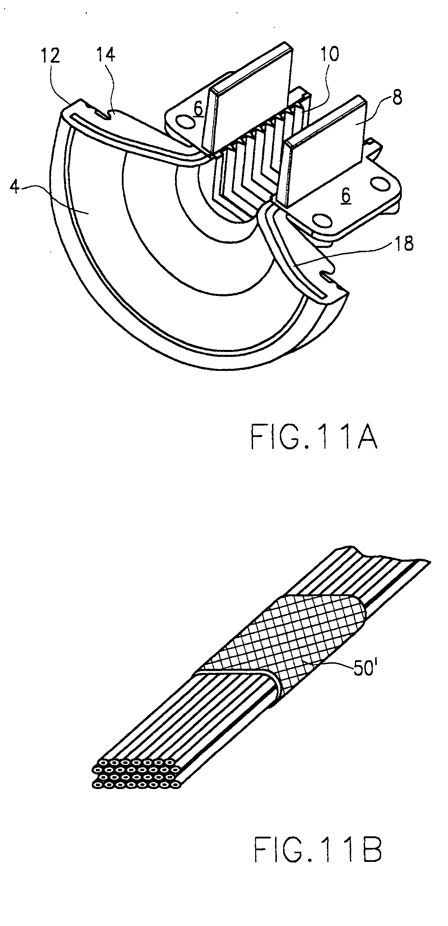

Soll keine Längswasserdichtung erreicht werden, so läßt sich bei durchmessermäßiges Untermaß aufweisenden Kabelbündeln eine Durchmesservergrößerung mit Hilfe der Ummantelungen 50 (Figuren 8A, 8B) und 50' (Fig. 11 B) erreichen.

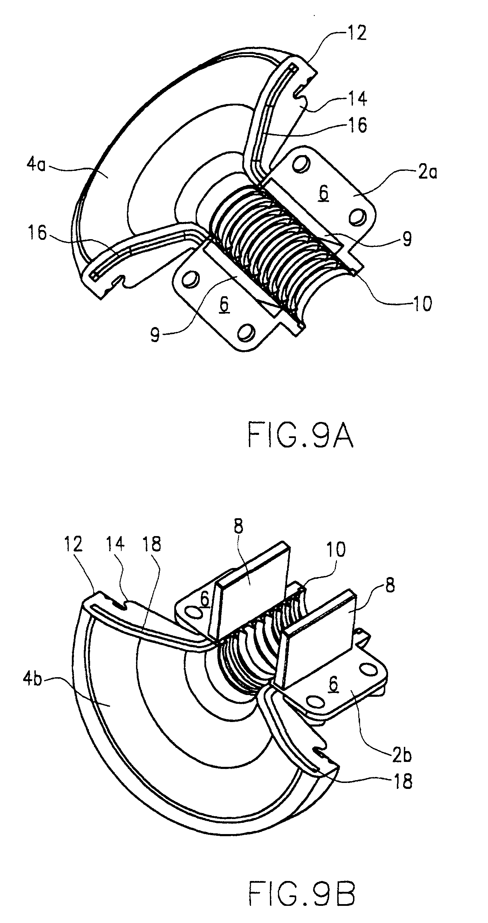

In den Figuren 9A und 9B sind die beiden Teile einer erfindungsgemäß ausgestalteten, geteilten Tülle perspektivisch dargestellt. Die in Fig. 9A dargestellte Halbschale umfaßt ein oberes Preßelement 2a und ein sich daran anschließendes Verbindungsabschnittselement 4a. Entsprechend weist die in Fig. 9B dargestellte andere Halbschale der Tülle ein unteres Preßelement 2b auf, an welches sich ein Verbindungsabschnittselement 4b anschließt. An der in Fig. 9B dargestellten unteren Hälfte der Tülle sind vorspringende Federn 8 vorgesehen, zwischen welchen sich eine rippenförmige Vorsprünge 10 aufweisender Durchtrittskanal für ein Leitungsbündel erstreckt. Die in Fig. 9A dargestellte Halbschale weist zwei nutenförmige Aufnahmetaschen 9 auf, in welche die Federn 8 eingreifen, wenn die in den Figuren 9A und 9B dargestellten Hälften der Tülle zusammengefügt werden. Im zusammengefügten Zustand bilden die in den Figuren 9A und 9B mit den rippenförmigen Vorsprüngen 10 versehenen gewölbten Abschnitte einen Durchtrittskanal für ein längliches Objekt, also z.B. für den in Fig. 8 dargestellten Leitungsstrang.

Die rippenförmigen Vorsprünge 10 sind nebeneinander in den Preßelementen 2a und 2b ausgebildet. Sind die beiden Tüllenhälften der Figuren 9A und 9B in Gebrauchsstellung zusammengefügt, so erstrecken sich die rippenartigen Vorsprünge in den Durchtrittskanal hinein, um auf diese Weise dessen lichten Durchmesser zu verringern. Die rippenförmigen Vorsprünge 10 bestehen aus einem flexiblen Material, wie Gummi, Kautschuk, Silikon oder dergleichen, und sind vorteilhafterweise in einer nicht dargestellten Schicht ausgebildet, welche mit der Innenoberfläche des Durchtrittskanals verbunden ist.

Jede der in den Figuren 9A und 9B dargestellte Tüllenhälfte ist mit sich paarweise gegenüberliegenden Flanschelementen 6 versehen. Diese Flanschelemente verlaufen in der Teilungsebene, längs welcher die Tülle geteilt ist. Jedes Flanschelement 6 ist mit Befestigungseinrichtungen sowie mit Bohrlöchern versehen, mit deren Hilfe die in den Figuren 9A und 9B dargestellten Tüllenhälften in ihrer Gebrauchsstellung fixiert werden können. Es versteht sich, daß in der Gebrauchsstellung ein Leitungsstrang in dem von den beiden Preßelementen 2a und 2b ausgebildeten Durchtrittskanal angeordnet ist und daß durch Druckausübung auf die Flanschelemente 6 eine Druckwirkung auf den in diesem Durchtrittskanal angeordneten Abschnitt des Leiterstranges ausgeübt wird.

Die rippenartigen Vorsprünge haben vorzugsweise eine Höhe von etwa 3 mm und sind vorzugsweise etwa 2 bis 5 mm voneinander beabstandet. Vorteilhafterweise haben die Vorsprünge 10 eine keilförmige Querschnittsgestalt, wobei diese Vorsprünge mit ihren breiten Enden an den zugehörigen Preßelementen 2a bzw. 2b befestigt sind und mit ihren Spitzen in das Innere des von den beiden Teilen der erfindungsgemäßen Tülle gebildeten Durchtrittskanal weisen, um dessen lichten Durchmesser etwas zu verringern.

Diese rippenförmigen Vorsprünge 10 üben eine Doppelfunktion aus. Erstens gewährleisten sie ein verrutschsicheres Festhalten des den Leitungsstrang bildenden Aderbündels selbst dann, wenn der Durchmesser dieses Leitungsstranges als Folge eines Schwindungsprozesses im Lauf der Zeit kleiner wird und zweitens gewährleisten diese Vorsprünge im Falle solcher Schwindungen eine Aufrechterhaltung der zwischen Leitungsstrangoberfläche und Tülleninnenumfang erzielten Dichtwirkung im Wege einer "Selbstheilung". Zu den vorstehend erwähnten Schwindungsvorgängen kann es kommen, wenn ein zum Ausfüllen von Hohlräumen zwischen benachbarten Leiteradern des Leitungsstrang sowie zum Ausfüllen eines Zwischenraumes zwischen dem Außenumfang des Leitungsstranges und dem Innenumfang der Tülle benutztes Dichtungsmittel im Laufe der Zeit schwindet. Derartige Dichtungsmittel enthalten beispielsweise Butyl oder andere klebend-dichtende Materialien. In der Fachwelt sind sogenannte "Kleberbänder" bekannt, die von der klebenden und dichtenden Wirkung von Butyl Gebrauch machen, wie in der DE 44 41 513 A1 der Anmelderin beschrieben.

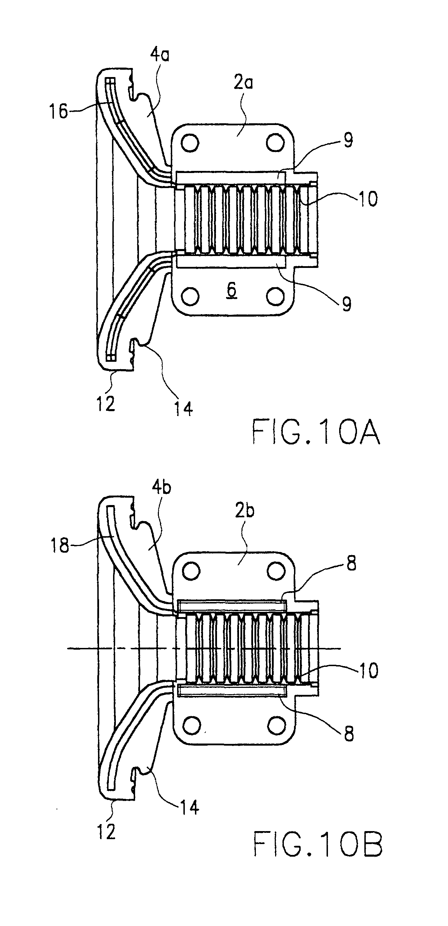

Die Figuren 10A und 10B zeigen die in den Figuren 9A und 9B perspektivisch dargestellten Teile jeweils in einer Aufsicht.

An das in den Zeichnungen linksseitige Ende der die rippenförmigen Vorsprünge 10 aufweisenden Preßelemente 2a, 2b schließt sich ein aus den Hälften 4a und 4b bestehender Verbindungsabschnitt an. Dieser Verbindungsabschnitt ist in der gleichen Ebene geteilt wie der Preßabschnitt, welcher die sich daran anschließenden Preßelemente 2a, 2b aufweist. Der Verbindungsabschnitt hat eine trichterförmige Gestalt und eine sich trichterförmig erweiternde Durchtrittsöffnung. Diese Durchtrittsöffnung ist nach dem Durchtrittskanal des Preßabschnittes ausgerichtet und im Übergang vom Preßabschnitt zum Verbindungsabschnitt hat die Durchtrittsöffnung des Verbindungsabschnittes den gleichen Innendurchmesser wie der Durchtrittskanal des Preßteiles. In der Zeichnung nach links hin erweitert sich diese Durchtrittsöffnung fortschreitend.

Wie schon beschrieben, können die Verbindungsabschnittselemente 4a, 4b aller beschriebenen Ausführungsformen in ihrem Inneren Verstärkungen, wie das Verstärkungselement 25, aufweisen. Dieses Verstärkungselement 25 kann einstückig mit den Preßelementen 2a, 2b ausgebildet sein und sich um ein vorbestimmtes Maß in das Verbindungselement hinein erstrecken. Durch das Verstärkungselement 25 erhält der den Preßabschnitten 2a, 2b benachbarte Bereich der Trichtereiemente 4a, 4b eine gesteigerte Festigkeit, insbesondere in dem in der Zeichnung zu erkennenden engeren Trichterbereich. In dieser bevorzugten Ausführungsform besitzt der äußere Randbereich der trichterförmigen Verbindungsabschnittselemente 4a, 4b eine geringere Festigkeit als die übrige Tülle.

An der Außenseite dieses nachgiebig-flexiblen Randbereiches des trichterförmigen Verbindungsabschnittes ist eine Rastkante 12 ausgebildet, welche mit einer Dichtlippe 14 zusammenwirkt, um eine Abdichteinrichtung zu schaffen. Ist die erfindungsgemäße Tülle in eine Öffnung einer Trennwand eingesetzt, so umgreift diese Dichteinrichtung mit den Elementen 12 und 14 einen (nicht dargestellt) Rand der Wandung abdichtend.

Die erfindungsgemäße Tülle besteht vorzugsweise teilweise aus Polyamid (PA). Lediglich der flexibel-nachgiebige Randbereich mit der Dichtlippe 14 und der Rastkante 12 besteht aus einem weicheren Werkstoff, wie EPDM/TPE, welcher sich um das nicht dargestellte Verstärkungselement (vgl. Fig. 3) herum erstreckt. Wie schon erwähnt, bestehen die rippenförmigen Vorsprünge 10, die in dem Durchtrittskanal vorgesehen sind, welche die beiden Preßelemente 2a, 2b in ihrer zusammengefügten Gebrauchsstellung bilden, aus einem nachgiebig-elastischen Material, wie Gummi oder Silikon.

### Die Verwendung der geteilten Tülle nach der Erfindung erfolgt vorzugsweise wie folgt:

Zunächst wird ein Kabelbündel, wie der Leitungsstrang gemäß Fig. 8, in eine der beiden Tüllenhälften eingelegt. Ist vorgesehen im Bereich der Tülle den Leitungsstrang längswasserdicht zu gestalten, so sind hinreichende Mengen an Butyl oder einem anderen geeigneten Dichtmaterial bereitzustellen, um alle Zwischenräume zwischen den benachbarten Adern des Leitungsstranges, aber auch alle Zwischenräume zwischen dem Außenumfang des Leitungsstranges und dem Innenumfang der Tülle im Bereich der Preßelemente 2a, 2b dichtend zu verfüllen. In diesem Falle weist die Durchtrittsöffnung im Bereich der Preßelemente Untermaß zu dem das Dichtungsmaterial aufweisenden Leitungsstrang (Kabelbündel) auf. Wenn die geteilte Tülle um den Leitungsstrang geschlossen wird und die Flanschelemente 6 aufeinander zu bewegt werden, so wird ein gleichmäßiger Druck auf das in dem Durchtrittskanal befindliche Teilstück des Leitungsstranges ausgeübt, wodurch das Dichtungsmaterial abdichtend in alle Hohl- und Zwischenräume gedrückt wird und folglich der Leitungsstrang längswasserdicht gestaltet ist.

Ist keine Längswasserabdichtung im vorstehend beschriebenen Sinne vorgesehen, so kann auf Butyl oder andere Dichtungsmaterialien verzichtet werden. Ist der Außendurchmesser eines Kabelbündels zu gering, um das erforderliche Untermaß in bezug auf den Innendurchmesser des Durchtrittskanals (im Bereich der Preßelemente 2a, 2b) zu gewährleisten, so wird der Leitungsstrang im gewünschten Bereich mit der in Fig. 8 gezeigten Ummantelung 50 versehen. Dieser durchmessermäßig vergrößerte Abschnitt 50 wird sodann zunächst in die eine Hälfte der geteilten Tülle eingebracht, worauf die andere Hälfte der Tülle, den Leitungsstrang umschließend, mit der ersten Hälfte verbunden wird.

Mithin gestattet die erfindungsgemäße Tülle das Durchführen eines Leitungsstranges durch eine Wandungsöffnung, wobei der Außenrand der Tülle die Wandungsöffnung dichtend abschließt und wobei, falls gewünscht, das Kabelbündel im Bereich der Tülle längswasserdicht gemacht ist.

Die im Bereich des Durchtrittskanals des Preßteils 2a, 2b vorgesehenen ringförmigen Rippen 10 gewährleisten ein verrutschsicheres Festhalten des Leitungsstranges in der Tülle (falls keine Dichtungsmaterialien zwischen den Leitungsstrangadem und/oder zwischen dem Leitungsstrangaußenumfang und der Tülle vorgesehen sind) und gewährleisten im Falle von längswasserdicht gestalteten Leitungsstrangabschnitten einen Selbstheilungseffekt, falls der Außendurchmesser des Kabelbündels als Folge von Schwindungserscheinungen bei der Dichtungsmasse abnehmen sollte. In einem solchen Fall kompensieren die elastisch-flexiblen rippenförmigen Vorsprünge 10 das Schwinden mit dem Resultat, daß die Längswasserdichtigkeit trotz des Schwindens gewährleistet ist.

In Fig. 11B ist ein Bündel von Flachbandleitern dargestellt, welche von einer Ummantelung 50' umhüllt sind, welche ihrem Zweck nach der in den Figuren 8A und 8B dargestellten Ummantelung 50 entspricht. Während das in den Figuren 8A und 8B dargestellte Kabelbündel einen im wesentlichen kreisförmigen Querschnitt aufweist, besitzt das in Fig. 11B dargestellte Bündel von Flachbandleitern einen im wesentlichen quadratischen oder rechteckigen Querschnitt. Das in Fig. 11A dargestellte Teil einer erfindungsgemäßen Tülle besitzt einen Durchtrittskanal, welcher eine quadratisch bzw. rechteckige Gestalt aufweist und somit an die in Fig. 11B dargestellte Querschnittsgestalt eines Leiterbündels angepaßt ist. Es versteht sich, daß ein solcher quadratisch oder rechteckig gestalteter Durchtrittskanal nicht notwendigerweise die dargestellten rippenförmigen Vorsprünge 10 aufweisen muß, sondern eine glatte Oberfläche aufweisen kann, wie beispielsweise in den Figuren 1, 3, 5A und 5B dargestellt. In seiner bevorzugten Ausführungsform besitzt die Tülle gemäß Fig. 11A in dem trichterförmigen Verbindungselement das anhand von Fig. 3 beschriebene Verstärkungselement, welches vorzugsweise aus Polyamid besteht. Der äußere Teil dieses trichterförmigen Verbindungselementes besteht, wie anhand von Fig. 3 beschrieben, aus einem nachgiebigeren Material, vorzugsweise aus EPDM.

Die Figuren 9 bis 12 zeigen, daß die Tülle in den Trennflächen ihres trichterförmigen Verbindungsabschnittes 4 ein Nut- und Federsystem aufweist, mit dessen Hilfe die beiden Hälften des Verbindungstrichters fluiddicht miteinander verbunden werden können. Insbesondere zeigen diese Figuren in den dargestellten Trennflächen eine vorspringende Feder 16 und eine Aufnahmenut 18. Ein Nut- und Federsystem ist in den Trennflächen der Verbindungsabschnitte bei allen Ausführungsformen der erfindungsgemäßen Tülle bevorzugt. Die Trennflächen bestehen einschließlich Nuten und Fedem aus einem weichen Kunststoff, wie beispielsweise EPDM/TPE. Falls die Verbindungsbereiche nicht vollständig aus einem solchen Kunststoff bestehen, sind die Trennflächen einschließlich Nut und Federn zumindest mit einem nachgiebigen Kunststoff (EPDM) beschichtet. Als Alternative zu dem vorstehend beschriebenen Nut- und Federsystem können zum wasserdichten Zusammenfügen der Trennflächen der Verbindungsabschnitte vollflächige Verklebungen benutzt werden. Auch das Versehen der beiden Trennflächen mit einer Dichtmasse kann mit Erfolg benutzt werden. Auch die Befestigungsflansche 6 können zwecks fluiddichter Ausführung mit einem gummielastischen Werkstoff, wie EPDM/TPE, beschichtet werden.

Die in den vorhergehend beschriebenen Ausführungsformen der erfindungsgemäßen Tülle erörterte Ausgestaltung des Außenumfanges des trichterförmigen Verbindungsabschnittes 4 mit Rastkante 12 und Dichtlippe 14 kann durch andere geeignete Ausgestaltungen ersetzt werden. So zeigt Fig. 13 eine erfindungsgemäße geteilte Tülle, deren trichterförmig gestalteter Verbindungsabschnitt 4 im Bereich seines Umfanges mit einem Karosserieblech 19 verschraubt ist. Zu diesem Zweck sind im Umfangsbereich des Verbindungsabschnittes 4 geeignete Schraubeinrichtungen vorgesehen. Fig. 13 zeigt ferner einen Dichtring 20, der in den trichterförmigen Verbindungsabschnitt 4 integriert ist. Es können im Prinzip, soweit die Ausgestaltung sich hierzu eignet, alle bekannten Ausführungsformen von Einzieh, Einschieb- bzw. Eindrücktüllen in geteilter Ausführung hergestellt werden. Der Trichterbereich kann hierbei beliebig gestaltet sein.

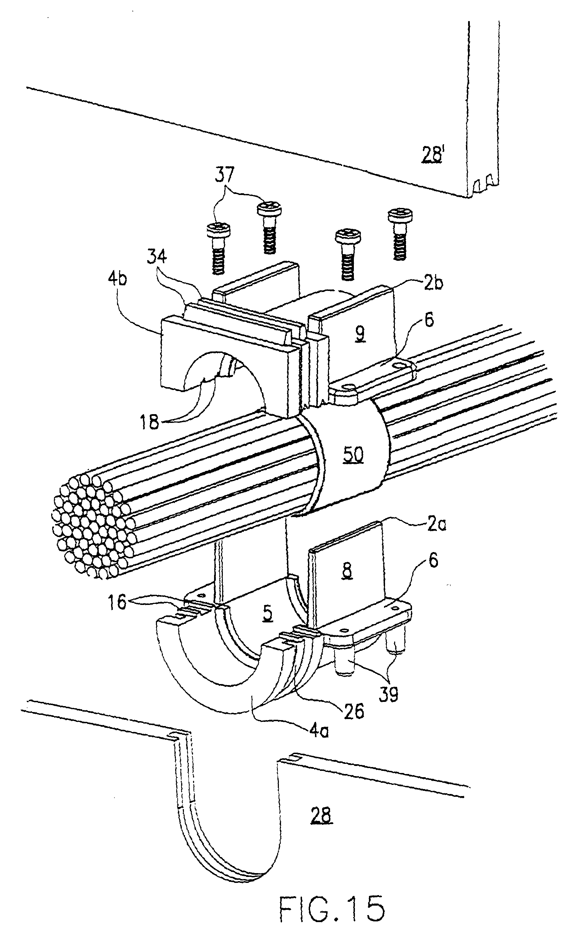

Fig. 14 zeigt eine Ausgestaltung des Außenumfanges des trichterförmigen Verbindungsabschnitts 4 mit einem Außengewinde 22, welches am äußersten unteren Umfang des trichterförmigen Verbindungsabschnittes 4 ausgebildet ist. Mit diesem Außengewinde 22 läßt sich ein an einem teilbaren Ring 24 vorgesehenes Innengewinde verschrauben, um ein dazwischengelegtes Karosserieblech 19 festzuhalten. Wie Fig. 14 ferner zu entnehmen, ist ein Dichtring 20 vorgesehen, welcher in den trichterförmigen Verbindungsabschnitt 4 integriert ist, um einen wasserdichten Anschluß der Tülle an eine Wandung zu gewährleisten.

In den Figuren 15 bis 17B ist eine erfindungsgemäße geteilte Tülle dargestellt, die sich von den vorhergehend beschriebenen Ausführungsformen im wesentlichen dadurch unterscheidet, daß der Verbindungsabschnitt 4 nicht trichterförmig gestaltet ist. Auch bei der Ausführungsform gemäß Figuren 15 bis 17B schließt sich der Verbindungsabschnitt 4 in Längsrichtung, d.h. axial, an den Preßabschnitt an.

Die in Fig. 15 dargestellte Ausführungsform der erfindungsgemäßen geteilten Tülle unterscheidet sich von der in Fig. 1A dargestellten Ausführungsform der erfindungsgemäßen geteilten Tülle in erster Linie durch die Gestaltung des Verbindungsabschnittes, der bei beiden Ausführungsformen aus einem oberen Teil 4b und einem unteren Teil 4a besteht. Wenngleich in Fig. 15 nicht dargestellt, bestehen auch die Verbindungsabschnittselemente 4a, 4b der Ausführungsform gemäß Figuren 15 bis 17B aus einem Hybrid-Material, nämlich einem als "Gerippe" dienenden Versteifungsmaterial, entsprechend dem Verstärkungsmaterial 25 in Fig. 3, und einem dieses Versteifungsmaterial umgebenden elastisch-weichen Werkstoff, wie EPDM/TPE. Wie auch die mit dem trichterförmigen Verbindungsabschnitt versehenen Ausführungsformen der erfindungsgemäßen Tülle sind auch die Verbindungsabschnitte 4a und 4b der in Fig. 15 dargestellten Ausführungsform in ihren Trennflächen mit einem Nut- und Federsystem 16, 18 versehen. Als Folge des vorstehend beschriebenen Aufbaus aus einem inneren, festen Werkstoff, vorzugsweise Polyamid, und einem äußeren, weicheren Werkstoff (EPDM/TPE) in Verbindung mit dem vorstehend genannten Nut- und Federsystem ist es gelungen, im Bereich der Trennebenen Formstabilität und Dichtigkeit zu gewährleisten.

Eine mangelnde Formstabilität im Bereich der Trennflächen würde beim Einwirken äußerer Kräfte zum Ausbilden kleiner Durchlaßöffnungen zwischen den Trennflächen führen, was Undichtigkeiten zur Folge hätte.

Die Ausführungsform gemäß Figuren 15 bis 17B ist im Gegensatz zu den zuvor beschriebenen Ausführungsformen nicht dazu bestimmt, in eine Bordwand dichtend eingezogen zu werden, sondern ist dazu bestimmt, dichtend in eine Wandung eingeschoben zu werden. Eine solche Wandung ist in Fig. 15 schematisch mit dem Bezugszeichen 28 (unten) und 28' (oben) bezeichnet. Wie Fig. 15 zu entnehmen, weist der untere Teil 4a des Verbindungsabschnittes eine Profilierung 26 auf, welche formschlüssig mit einer in der unteren Wandung 28 ausgebildeten Profilierung abdichtend zusammenwirkt. Die obere Hälfte 4b des Verbindungsabschnittes ist mit Dichtleisten 34 versehen, deren Gestaltung formschlüssig mit einer entsprechenden Gestaltung in der Unterkante des oberen Wandungsabschnittes 28' abdichtend zusammenwirkt. In der Gebrauchstellung sind die zusammengeführten Verbindungsabschnitte 4a und 4b mit der Wandung 28, 28' dichtend verbunden, so daß der in Fig. 15 dargestellte Leitungsstrang in abgedichteter Weise diese Wandung 28, 28' durchsetzt.

Wie bereits anhand der vorhergehenden Ausführungsbeispiele beschrieben, schließt sich axial (longitudinal) an die Verbindungsabschnittselemente 4a, 4b jeweils ein Preßelement 2a (unten) bzw. 2b (oben) an. Wie anhand der vorhergehenden Ausführungsbeispiele beschrieben, bestehen die Preßelemente zumindest im Bereich der Verbindungsflansche 6 aus einem hinreichend rigiden Werkstoff, wie Polyamid (PA). Vorteilhafterweise sind bei allen Ausführungsformen der erfindungsgemäßen Tülle die Preßelemente und die Aussteifungen für die Verbindungsabschnittselemente 4a, 4b einstückig ausgebildet.

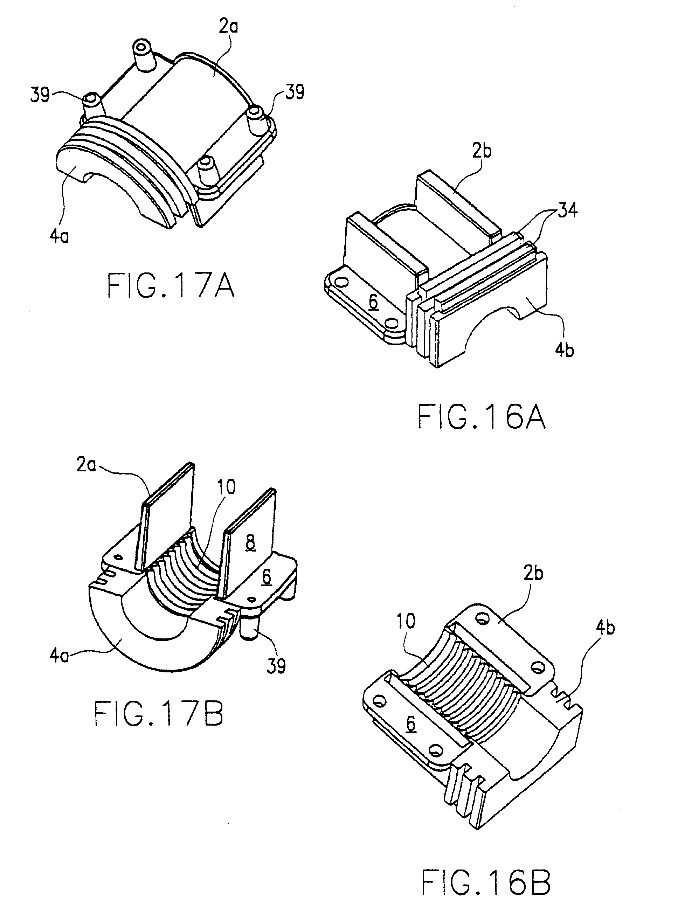

Die Figuren 16A und 16B zeigen verschiedene perspektivische Ansichten einer oberen Halbschale von Fig. 15, jeweils mit Preßelement 2b und Verbindungsabschnittselement 4b sowie mit Dichtleisten 34, wie anhand von Fig. 15 beschrieben. Fig. 16B zeigt, daß der aus einem rigiden Werkstoff bestehende Preßelementenabschnitt 2b mit einer gummielastischen Innenauskleidung versehen ist, in welcher Querrippen 10 ausgebildet sind, wie vorstehend anhand der Figuren 9 bis 11A sowie 12 beschrieben und dargestellt.

In den Figuren 17A und 17B ist die untere Halbschale gemäß Fig. 15 in verschiedenen perspektivischen Ansichten dargestellt. Wie Fig. 17B zu entnehmen, ist auch der Preßabschnitt der unteren Halbschale mit einer gummielastischen Innenauskleidung versehen, welche die bereits beschriebenen vorstehenden Rippen 10 aufweisen kann.

Es sei unterstrichen, daß in den Figuren 16 und 17 die in den Trennflächen der Verbindungsabschnittselemente 4a und 4b vorgesehenen Nut- und Federeinrichtungen nicht dargestellt sind.

Zum Miteinanderverbinden der Oberschale und der Unterschale sind in Fig. 15 Schrauben 37 vorgesehen, welche durch in den Befestigungsflanschen 6 ausgebildete Bohrlöcher in Schrauben-Aufnahmen 39 einschraubbar sind, welche in den Figuren 15 und 17 angegeben sind.

Der in Fig. 15 dargestellte Leitungsstrang ist mit einer Ummantelung 50 versehen, welche vorstehend anhand von Fig. 8A bereits beschrieben worden ist. Eine solche Ummantelung 50 wird zweckmäßigerweise dann vorgesehen, wenn der Durchmesser des Leiterstranges nicht das erforderliche Übermaß in bezug auf den Durchmesser des Durchtrittskanals 5 aufweist. Mit Hilfe einer Ummantelung 50 kann sichergestellt werden, daß der Leiterstrang mit Preßsitz zwischen den Preßelementen 2a und 2b gehalten ist, wenn die beiden die erfindungsgemäße Tülle bildenden Halbschalen miteinander in ihrer Betriebsstellung verbunden sind.

Bei der Ausführungsform gemäß Fig. 15 bis 17 kann der Verbindungsabschnitt 4 zu einem Großteil aus einem vorzugsweise rigiden Werkstoff bestehen und kann nur die eigentliche Profilierung, d.h. die in der Zeichnung dargestellten Lamellen, mit einem weicheren Kunststoff beschichtet sein, um die angestrebte formstabile und dichtende Ausgestaltung im Bereich der Trennflächen zu gewährleisten. Ersatzweise kann auch der Randbereich der Durchführung mit einem flexibel-nachgiebigen Wulst versehen sein, wodurch der Verbindungsabschnitt 4 einschließlich der Profilierung (Kontur) aus einem vorzugsweise rigiden Kunststoff hergestellt sind.

Gelegentlich kann es vorteilhaft sein, an den freien Enden der Preßabschnitte aller vorstehend beschriebenen Ausführungsformen, also an dem dem Verbindungsabschnitt gegenüberliegenden Ende, Halte- oder Kupplungselemente, wie Hinterschneidungen, anzubringen, mit deren Hilfe die aufklappbaren Kupplungsstücke herkömmlicher Wellrohrschutzschläuche mit der erfindungsgemäßen Tülle gekuppelt werden können. Solche Kupplungselemente sind beispielsweise in den Figuren 1, 2 und 3 mit den Bezugszeichen 30 bezeichnet.

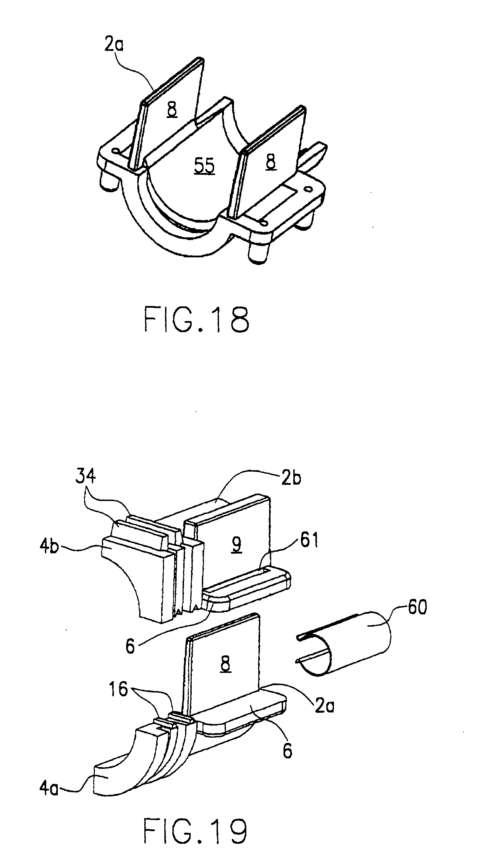

Fig. 18 zeigt von einer Halbschale der erfindungsgemäßen Tülle allein ein Preßelement 2a, welches mit jedem der vorstehend beschriebenen Verbindungsabschnittselemente 4a zu einer kompletten (unteren) Halbschale kombiniert werden kann. Bei dem in Fig. 18 dargestellten Preßelement besteht der zwischen den beiden Federelementen 8 ausgebildete gewölbte Abschnitt 55 des Durchtrittskanals aus einem flexiblen oder halbflexiblen, gummiartigen Werkstoff, wie EPDM/TPE. Im dargestellten Ausführungsbeispiel ist dieses gummiartige Material in den mit 56 bezeichneten einander gegenüberliegenden Bereichen gehalten, wobei sich dieses gummiartige Material zwischen diesen Bereichen wie eine Hängematte erstreckt, wie durch die gezeichnete Wölbung veranschaulicht. Die von dem "Hängematten"-Abschnitt 55 verschiedenen Teile des dargestellten Preßelementes 2a bestehen aus einem festen (rigiden) Material, wie Polyamid (PA). Die erfindungsgemäße Tülle kann ein Preßelement mit flexiblem oder halbflexiblem Abschnitt 55 in jeder ihrer beiden Halbschalen oder nur in einer ihrer Halbschalen enthalten.

Die in Fig. 18 dargestellte Ausgestaltung wenigstens eines der Preßelemente mit "Hängematten"-Abschnitt 55 gestattet ein Adaptieren des Durchtrittskanalsdurchmessers an den Durchmesser des im Durchtrittskanal aufgenommenen Leitungsstranges, insbesondere wenn der letztere ein gewisses Übermaß aufweist. Wie beispielsweise anhand von Fig. 8 beschrieben, ist ein Übermaß des Leitungsstrangdurchmessers in bezug auf den Durchmesser des Durchtrittskanals stets anzustreben, um auf den im Durchtrittskanal aufgenommenen Leitungsstrang den gewünschten Druck auszuüben.

Wie schon beschrieben, gilt für alle Ausführungsformen der Erfindung, daß sich das gewünschte Übermaß in Fällen, in welchen keine Längswasserdichtigkeit im Inneren des Leitungsstranges erforderlich ist, mit Hilfe von Ummantelungen 50 (Fig. 8A) bzw. 50' (Fig. 11B) oder durch die in der DE 196 40 816 A1 beschriebenen Füllstücke erreichen läßt. Ist hingegen eine Längswasserdichtigkeit erforderlich, so ergibt sich das Übermaß nahezu zwangsläufig dadurch, daß zwischen die Leitungen des Leitungsstranges eine Dichtmasse, wie Butyl, eingearbeitet ist, welche den Umfang des Leitungsstranges entsprechend vergrößert.

Bei der Ausführungsform gemäß Fig. 18 übt der "Hängematten"-Abschnitt 55 konstant einen Druck auf den im Durchtrittskanal vorliegenden Leitungsstrang aus, wodurch sichergestellt wird, daß bei einem gegebenenfalls auftretenden Schwinden der Dichtmasse der Druck auf den Leitungsstrang aufrechterhalten wird. Auf diese Weise übt das flexible oder halbflexible, gummiartige Material des Abschnitts 55 fortwährend eine Wirkung auf die Dichtmasse aus, die zu einem "Selbstheilungseffekt" führt, falls die Dichtmasse schwinden sollte. Die Ausführungsformen gemäß Figuren 9 bis 14 sowie 16B und 17B unterscheiden sich von der Ausführungsform gemäß Fig. 18 dadurch, daß bei den erstgenannten, die im übrigen aus einem festen (rigiden) Material, wie Polyamid, bestehen, lediglich eine innere Auskleidung aus einem flexiblen Material, wie Gummi, Kautschuk, Silikon oder dergleichen, vorgesehen ist, aus welchem die dargestellten rippenförmigen Vorsprünge 10 bestehen.

Zur Klarstellung sei unterstrichen, daß bei allen in dieser Anmeldung dargestellten und beschriebenen Ausführungsformen der erfindungsgemäßen Tülle unter "Durchtrittskanal" stets der zur Aufnahme eines Leiterstranges vorgesehene rohrförmige Raum zu verstehen ist, der sich zwischen zwei bestimmungsgemäß miteinander verbundenen Preßelementen 2a, 2b ergibt.

Ferner sei zum Zwecke der Klarstellung darauf hingewiesen, daß im Rahmen dieser Anmeldung unter "Halbschale" ein jeweils ein Preßelement und ein Verbindungsabschnittselement umfassendes Gebilde zu verstehen ist, welches mit einer zweiten Halbschale zu einer erfindungsgemäßen geteilten Tülle zusammenfügbar ist.

Zum Zusammenfügen der beiden Halbschalen sind vorstehend bereits Schraubverbindungen (Figuren 1 bis 3 sowie 15 bis 17), Rastverbindungen (Figuren 5 bis 7) und dergleichen beschrieben worden. Eine im Hinblick auf das vorstehend beschriebene Schwinden einer im Leiterstrang vorgesehenen Dichtmasse vorteilhafte Ausgestaltung ist in Fig. 19 dargestellt. Diese Figur zeigt schematisch die rechtseitigen Teile der oberen Halbschale (4b, 2b) und der unteren Halbschale (4a, 2a) der in Fig. 15 dargestellten Anordnung. So sind auch die Dichtleisten 34 sowie die Federn 16 dargestellt. Mit dem Bezugszeichen 60 ist in Fig. 19 ein Federclip bezeichnet, der dazu dient, die obere Halbschale und die untere Halbschale in der Betriebsstellung fest miteinander zu verbinden. Sind in der Betriebsstellung die Befestigungsflansche 6 der oberen Halbschale und der unteren Halbschale aufeinandergelegt, so umgreift der Federclip 60 die aufeinandergelegten Befestigungsflansche, wobei die eine Klemmleiste des Federclips 60 den oberen Trennflansch beaufschlagt und die andere Trennleiste des Federclips die Unterseite des unteren Trennflansches beaufschlagt. Im dargestellten Ausführungsbeispiel sind in den Befestigungsflanschen Längsnuten 61 vorgesehen, von welchen Fig. 19 eine solche Nut 61 im oberen Befestigungsflansch zeigt. Sollte es während der Lebensdauer einer erfindungsgemäßen Tülle zu einem Schwinden des Leitungsstrangdurchmessers kommen, so wird als Folge der Federkraft des Federclips 60 die vorteilhafte Druckausübung auf den Leiterstrangquerschnitt aufrechterhalten und auf diese Weise der angestrebte Selbstheilungseffekt gewährleistet oder zumindest unterstützt.

## Patentansprüche

1. Längs von Trennflächen geteilte Vorrichtung zum Halten, Führen und insbesondere Durchführen länglicher Objekte, wie vieladriger Leitungsstränge, mit einer oberen Halbschale (2b, 4b) und einer unteren Halbschale (2a, 4a), jeweils umfassend wenigstens ein Preßelement (2a bzw. 4b) und wenigstens ein Verbindungsabschnittselement (4a bzw. 4b), wobei zwischen den fluiddicht miteinander verbundenen Preßelementen ein rohrförmiger Durchtrittskanal (5) für einen Leitungsstrang ausgebildet ist und der Außenumfang der Verbindungsabschnittselemente fluiddicht mit dem Rand einer Wandungsöffnung verbindbar ist, **dadurch gekennzeichnet, daß**
- bei jeder Halbschale das Verbindungsabschnittselement (4a bzw. 4b) in Erstrekkungsrichtung der länglichen Objekte an das Preßelement (2a bzw. 2b) angeschlossen ist und
- die Verbindungsabschnittselemente (4a; 4b) wenigstens im Bereich ihrer Trennflächen formstabil (verwindungssteif) und abdichtend ausgebildet sind.

2. Vorrichtung nach Anspruch 1, **dadurch gekennzeichnet, daß** in den Verbindungsabschnittselementen (4a; 4b) im an das Preßelement (2a; 2b) anschließenden Bereich eine Aussteifung (25) aus einem festen Material, wie Polyamid, vorgesehen ist, welche umgeben ist von einem elastischen Werkstoff, wie EPDM/TPE, und daß in den Trennflächen der Verbindungsabschnittselemente (4a; 4b) ein Nut- und Federsystem (16, 18) vorgesehen ist.

3. Vorrichtung nach Anspruch 1 oder 2, **dadurch gekennzeichnet, daß** jedes Preßelement (2a; 2b) zwei abdichtend einander gegenüberliegende Flanschelemente (6) aufweist, zwischen welchen sich jeweils ein Wandungsabschnitt des Durchtrittskanais (5) erstreckt.

4. Vorrichtung nach wenigstens einem der Ansprüche 1 bis 3, **dadurch gekennzeichnet, daß** im Bereich des Außenumfanges der Verbindungsabschnittselemente (4a; 4b) eine Rastkante (12) und eine Dichtlippe (14) ausgebildet sind.

5. Vorrichtung nach wenigstens einem der Ansprüche 1 bis 4, **dadurch gekennzeichnet, daß** an dem dem Verbindungsabschnitt (4a; 4b) axial gegenüberliegende Ende des Preßelementes (2a; 2b) ein Kupplungsteil (30) zum Ankuppeln von Schutzrohren oder dergleichen vorgesehen ist.

6. Vorrichtung nach wenigstens einem der Ansprüche 1 bis 5, **dadurch gekennzeichnet, daß** die Preßelemente (2a; 2b) eine halbkugelförmige Gestalt aufweisen, die zu einer Kugel zusammenfügbar sind, welche in einer Kugelschale (3) drehbar gelagert sind, so daß der zwischen den beiden Preßelementen ausgebildete Durchtrittskanal (5) richtungsvariabel positionierbar ist.

7. Vorrichtung nach wenigstens einem der Ansprüche 1 bis 6, **dadurch gekennzeichnet, daß** der Durchtrittskanal (5) mit einer weichen, elastischen Innenauskleidung versehen ist.

8. Vorrichtung nach Anspruch 7, **dadurch gekennzeichnet, daß** die Innenauskleidung in den Durchtrittskanal (5) hineinragende, rippenartige Vorsprünge (10) aufweist, mit welchen der Außenumfang des Leitungsstranges beaufschlagbar ist.

9. Vorrichtung nach wenigstens einem der Ansprüche 1 bis 8, **dadurch gekennzeichnet, daß** das Preßelement (2a) einer der beiden Halbschalen vorstehende Federelemente (8) aufweist, welche in Aufnahmetaschen (9) aufnehmbar sind, die im Preßelement (2b) der anderen Halbschale ausgebildet sind.

10. Vorrichtung nach Anspruch 9, **dadurch gekennzeichnet, daß** die Höhe der Federelemente (8) und der Durchmesser des zwischen der Federelementen anzuordnenden Leitungsstranges aufeinander abstimmbar sind, so daß die Federelemente (8) als Füllhöhenindikatoren dienen.

11. Vorrichtung nach Anspruch 3, **dadurch gekennzeichnet, daß** die Flanschelemente
(6) beider Halbschalen miteinander formschlüssig verschraubbar, verrastbar oder verklebbar sind.

12. Vorrichtung nach Anspruch 11, **dadurch gekennzeichnet, daß** zum Verbinden der Flanschelemente (6) Federclips (60) vorgesehen sind, welche die einander gegenüberliegenden Preßelemente (6) aufeinanderzu belasten.

13. Vorrichtung nach wenigstens einem der Ansprüche 1 bis 12, **dadurch gekennzeichnet, daß** bei wenigstens einer der beiden Halbschalen der Preßabschnitt (2a; 2b) einen aus einem flexiblen oder halbflexiblen Werkstoff, wie EPDM/TPE, bestehenden Abschnitt (55) aufweist, welcher einen elastischen Bereich der Wandung des Durchtrittskanals (5) bildet.

14. Vorrichtung nach einem der Ansprüche 1 bis 3 bzw. einem der Ansprüche 5 bis 13, **dadurch gekennzeichnet, daß** im Bereich des Umfanges der Verbindungsabschnittselemente (4a; 4b) Einrichtungen (19; 20) vorgesehen sind, mit deren Hilfe die Verbindungselemente mit der Umgebung einer Wandöffnung verschraubbar sind.

15. Vorrichtung nach einem der Ansprüche 1 bis 14, **dadurch gekennzeichnet, daß** die Verbindungsabschnittselemente (4a; 4b) zu einer trichterförmigen Gestalt miteinander verbindbar sind, wobei der den Preßelementen (2a; 2b) zugewandte, durchmessermäßig engere Trichterabschnitt eine höhere Festigkeit aufweist als der durchmessermäßig weitere Trichterabschnitt, dessen Außenumfang mit der Wandung verbindbar ist.

16. Vorrichtung nach wenigstens einem der Ansprüche 1 bis 14, **dadurch gekennzeichnet, daß** in der Außenoberfläche der Verbindungsabschnittselemente (4a; 4b) ein Profil ausgebildet ist, mit dessen Hilfe eine mit einem entsprechenden Profil versehene Wandungsöffnung formschlüssig abdichtbar ist.

17. Verfahren zum Halten, Führen und insbesondere Durchführen eines länglichen Objektes, wie eines Leitungsstranges, mit Hilfe einer geteilten Vorrichtung, wobei das längliche Objekt in einen Preßabschnitt eines ersten Teils der Vorrichtung eingebracht, das zweite Teil der Vorrichtung den Leitungsstrang umschließend mit dem ersten Teil verbunden und ein Umfangsbereich der Vorrichtung dichtend mit dem Umfeld einer Wandungsöffnung verbunden wird, **dadurch gekennzeichnet, daß** die Verbindungsabschnittselemente (4a; 4b) der geteilten Vorrichtung formstabil (verwindungssteif) und fluiddicht miteinander verbunden werden.

18. Verfahren nach Anspruch 17, **dadurch gekennzeichnet, daß** mit Hilfe der miteinander verbundenen Preßabschnittselemente (2a; 2b) ein Druck auf das zwischen den Preßelementen gehaltene, längliche Objekt ausgeübt wird.

19. Verfahren nach Anspruch 18, **dadurch gekennzeichnet, daß** der Druck dadurch aufgebracht wird, daß der Durchmesser des Leitungsstranges ein Übermaß im Hinblick auf den lichten Durchmesser des zwischen den beiden Preßelementen ausgebildeten Durchtrittskanals (5) aufweist.

20. Verfahren nach Anspruch 18 oder 19, **dadurch gekennzeichnet, daß** der Druck dadurch aufgebracht wird, daß der Leitungsstrang im Bereich der Preßelemente mit einer Ummantelung (50; 50') versehen wird, um seinen Durchmesser zu vergrößern.

21. Verfahren nach Anspruch 18 oder 19, **dadurch gekennzeichnet, daß** zwischen den Leitern bzw. Adern des Leitungsstranges eine Dichtmasse, vorzugsweise aus Butyl, vorgesehen wird, welche den Durchmesser des Leitungsstranges vergrößert.

22. Verfahren nach Anspruch 18 oder 19, **dadurch gekennzeichnet, daß** der Druck dadurch aufgebracht wird, daß dem Leiterstrang wenigstens ein Füllstück eingefügt wird, um dessen Durchmesser zu vergrößern.

23. Verfahren nach Anspruch 18 oder 19, **dadurch gekennzeichnet, daß** der Druck mit Hilfe eines flexiblen oder halbflexiblen Materials, wie EPDM/TPE, ausgeübt wird, welches in wenigstens einem Teil der Wandung des Durchtrittskanals (5) vorgesehen wird.

24. Verfahren nach wenigstens einem der vorhergehenden Verfahrensansprüche, **dadurch gekennzeichnet, daß** der Durchmesser eines Leitungsstranges mit Hilfe wenigstens eines auch als Zentrierungsfederelement (8) dienenden Füllhöhenindikators eingestellt wird.

## Claims

1. A device divided along parting surfaces for holding, guiding and, in particular, leading elongated objects therethrough, for instance multiple wire bundles, comprising an upper half shell (2b, 4b) and a lower half shell (2a, 4a), each including at least one press element (2a and 2b, respectively) and at least one connecting section element (4a and 4b, respectively), with a tubular passage channel (5) for a wire bundle being formed between the press elements which are interconnected in fluid-tight fashion, and the outer circumference of the connecting section elements being connectable in fluid-tight fashion to an edge of a wall opening, **characterized in that**
- in each half shell the connecting section element (4a and 4b, respectively) is connected to the press element (2a and 2b, respectively) in the direction of extension of the elongated objects, and
- the connecting section elements (4a; 4b) are formed such that they are dimensionally stable (torsionally rigid) and have a sealing effect at least in the area of their parting surfaces.

2. A device according to claim 1, **characterized in that** in the connecting section elements (4a; 4b) in the area adjoining the press element (2a; 2b) there is provided a stiffened portion (15) consisting of a rigid material, such as polyamide, which is surrounded by an elastic material, such as EPDM/TPE, and that a tongue-and-groove system (16, 18) is provided in the parting surfaces of the connecting section elements (4a; 4b).

3. A device according to claim 1 or 2, **characterized in that** each press element (2a; 2b) has two sealingly opposite flange elements (6) between which a respective wall section of the passage channel (5) extends.

4. A device according to at least one of claims 1 to 3, **characterized in that** a locking edge (12) and a sealing lip (14) are formed in the area of the outer circumference of the connecting section elements (4a; 4b).

5. A device according to at least one of claims 1 to 4, **characterized in that** a coupling member (30) for coupling protective tubes, or the like, is provided at the end of the press element (2a; 2b) that is axially opposite to the connecting section (4a; 4b).

6. A device according to at least one of claims 1 to 5, **characterized in that** the press elements (2a; 2b) have a semispherical shape and can be joined to form a ball which is rotatably supported in a ball shell (3), so that the passage channel (5) formed between the two press elements can be positioned in variable directions.

7. A device according to at least one of claims 1 to 6, **characterized in that** the passage channel (5) is provided with a soft and elastic inner lining.

8. A device according to claim 7, **characterized in that** the inner lining has rib-like projections (10) which project into the passage channel (5) and which can act on the outer circumference of the wire bundle.

9. A device according to at least one of claims 1 to 8, **characterized in that** the press element (2a) of one of the two half shells comprises projecting spring elements (8) which can be received in receiving pockets (9) which are formed in the press element (2b) of the other half shell.

10. A device according to claim 9, **characerized in** that the height of the spring elements (8) and the diameter of the wire bundle to be arranged between the spring elements can be matched with respect to one another such that the spring elements (8) serve as level indicators.

11. A device according to claim 3, **characterized in that** the flange elements (6) of the two half shells can be screwed, locked or glued to one another in a positive manner.

12. A device according to claim 11, **characterized in that** spring clips (60) which load the opposite press elements (6) towards one another are provided for connecting the flange elements (6).

13. A device according to at least one of claims 1 to 12, **characterized in that** in at least one of the two half shells the press section (2a; 2b) has a section (55) which is made of a flexible or semiflexible material, such as EPDM/TPE, and which forms an elastic portion of the wall of the passage channel (5).

14. A device according to any one of claims 1 to 3 or any one of claims 5 to 13, **characterized in that** means (19; 20) are provided in the area of the circumference of the connecting section elements (4a; 4b) for screwing the connecting elements to the surroundings of a wall opening.

15. A device according to any one of claims 1 to 14, **characterized in that** the connecting section elements (4a; 4b) are interconnectable to obtain a funnel-shaped configuration, with the funnel section which has a smaller diameter and faces the press elements (2a; 2b) having a greater strength than the funnel section which has a larger diameter and whose outer circumference is connectable to the wall.

16. A device according to at least one of claims 1 to 14, **characterized in that** a profile is formed in the outer surface of the connecting section elements (4a; 4b) for positively sealing a wall opening provided with a matching profile.

17. A method for holding, guiding and, in particular, leading through an elongated object, such as a wire bundle, with the help of a divided device, with the elongated object being introduced into a press section of a first part of the device, the second part of the device being connected to the first part to surround the wire bundle, and a circumferential portion of the device being sealingly connected to the surroundings of a wall opening, **characterized in that** the connecting section elements (4a; 4b) of the divided device are interconnected in a dimensionally stable (torsionally rigid) manner and in fluid-tight fashion.

18. A method according to claim 17, **characterized in that** with the help of the interconnected press section elements (2a; 2b) a pressure is exerted on the elongated object held between the press elements.

19. A method according to claim 18, **characterized in that** pressure is applied
**in that** the diameter of the wire bundle has an oversize with respect to the clear diameter of the passage channel (5) formed between the two press elements.

20. A method according to claim 18 or 19, **characterized in that** pressure is applied **in that** the wire bundle is provided in the area of the press elements with a sheathing (50; 50') to enlarge the diameter thereof.

21. A method according to claim 18 or 19, **characterized in that** a sealing compound, preferably of butyl, is provided between the wires of the wire bundle for increasing the diameter of the wire bundle.

22. A method according to claim 18 or 19, **characterized in that** pressure is applied **in that** at least one filler member is inserted in the wire bundle to increase the diameter of said bundle.

23. A method according to claim 18 or 19, **characterized in that** pressure is exerted with the help of a flexible or semiflexible material, such as EPDM/TPE which is provided in at least a part of the wall of the passage channel (5).

24. A method according to at least one of the preceding claims of the method, **characterized in that** the diameter of a wire bundle is adjusted with the aid of at least one level indicator that also serves as a centering spring element (8).

## Revendications

1. Dispositif, divisé le long de faces de séparation, pour le maintien, le guidage et, en particulier, le passage d'objets allongés, tels que des tronçons de lignes à multiples conducteurs, avec une demi-coque supérieure (2b, 4b) et une demi-coque inférieure (2a, 4a), comprenant chacune au moins un élément de pressage (2a ou 4b), et au moins un élément de tronçon de liaison (4a ou 4b), entre les éléments de pressage, reliés ensemble de façon étanche aux fluides, étant réalisé un canal de passage (5) à forme tubulaire pour un tronçon de ligne, et la périphérie extérieure des éléments de tronçon de liaison étant susceptible d'être reliée de façon étanche aux fluides au bord d'une ouverture de paroi, **caractérisé en ce que** :
- pour chaque demi-coque, l'élément de tronçon de liaison (4a ou 4b) est raccordé dans la direction de l'étendue des objets allongés à l'élément de pressage (2a ou 2b), et
- les éléments de tronçon de liaison (4a ; 4b) sont de forme stable (rigidité au gauchissement) et à effet étanchéifiant, au moins dans la zone de leurs faces de séparation.

2. Dispositif selon la revendication 1, **caractérisé en ce que**, dans les éléments de tronçon de liaison (4a ; 4b), dans la zone se raccordant à l'élément de pressage (2a ; 2b), est prévu un raidisseur (25) réalisé en un matériau ferme, tel que du polyamide, entouré par un matériau élastique, tel que du EPDM/TPE, et **en ce qu'**un système à rainure et languette (16, 18) est prévu dans les faces de séparation des éléments de tronçons de liaison (4a ; 4b).

3. Dispositif selon la revendication 1 ou 2, caracté-risé en ce que chaque élément de pressage (2a ; 2b) présente deux éléments de bridage (6) opposés l'un à l'autre avec effet d'étanchéité, entre lesquels s'étend respectivement un tronçon de paroi du canal de passage (5).

4. Dispositif selon au moins l'une des revendications 1 à 3, **caractérisé en ce qu'**une arête d'encliquetage (13) et une lèvre d'étanchéité (14) sont réalisées dans la zone de la périphérie extérieure des éléments de tronçon de liaison (4a ; 4b).

5. Dispositif selon au moins l'une des revendications 1 à 4, **caractérisé en ce qu'**une partie d'accouplement (30), pour assurer l'accouplement de tubes de protection ou analogues, est prévue sur l'extrémité de l'élément de pressage (2a ; 2b) opposée axialement au tronçon de liaison (4a ; 4b).

6. Dispositif selon au moins l'une des revendications 1 à 5, **caractérisé en ce que** les éléments de pressage (2a ; 2b) sont de configuration hémisphérique, pouvant être regroupés pour donner une sphère, montée à rotation dans une coque ou coquille sphérique (3), de manière que le canal de passage (5) réalisé entre les deux éléments de pressage puisse être positionné dans des directions variables.

7. Dispositif selon au moins l'une des revendications 1 à 6, **caractérisé en ce que** le canal de passage (5) est muni d'un revêtement intérieur élastique souple.

8. Dispositif selon la revendication 7, **caractérisé en ce que** le revêtement intérieur présente des saillies (10) du genre de nervures pénétrant dans le canal de passage (5), saillies à l'aide desquelles la périphérie extérieure du tronçon de ligne peut être sollicitée.

9. Dispositif selon au moins l'une des revendications 1 à 8, **caractérisé en ce que** l'élément de pressage (2a) d'une des deux demi-coques présente des éléments élastiques (8) en saillie, pouvant être logés dans des poches de logement (9) réalisées dans l'élément de pressage (2b) de l'autre demi-coque.

10. Dispositif selon la revendication 9, **caractérisé en ce que** la hauteur des éléments élastiques (8) et le diamètre du tronçon de ligne à disposer entre les éléments élastiques sont adaptés l'un à l'autre de manière que les éléments élastiques (8) servent d'indicateurs de hauteur de remplissage.

11. Dispositif selon la revendication 3, **caractérisé en ce que** les éléments de bridage (6) des deux demi-coques peuvent être vissés, encliquetés, ou collés ensemble, en étant mutuellement en ajustement de forme.

12. Dispositif selon la revendication 11, **caractérisé en ce que** des attaches élastique (60), qui sollicitent l'un vers l'autre les éléments de pressage (6) opposés l'un à l'autre, sont prévues pour assurer la liaison des éléments de bridage (6).

13. Dispositif selon au moins l'une des revendications 1 à 12, **caractérisé en ce que**, pour au moins l'une des deux demi-coques, le tronçon de pressage (2a ; 22b) présente un tronçon (55) formé à partir d'un matériau flexible ou semi-flexible, tel que EPDM/TPE, tronçon formant une zone élastique de la paroi du canal de passage (5).

14. Dispositif selon l'un des revendications 1 à 3 ou l'une des revendications 5 à 13, **caractérisé en ce que**, dans la zone de la périphérie des éléments de tronçon de liaison (4a ; 4b) sont prévus des dispositifs (19 ; 20), à l'aide desquels les éléments de liaison peuvent être vissés à l'environnement d'une ouverture de paroi.

15. Dispositif selon l'une des revendications 1 à 14, **caractérisé en ce que** les éléments de tronçon de liaison (4a ; 4b) peuvent être reliés ensemble pour donner une forme en entonnoir, le tronçon d'entonnoir le plus étroit en diamètre, tourné vers l'élément de pressage (2a ; 2b), ayant une résistance plus élevée que l'autre tronçon d'entonnoir ayant un diamètre plus grand, dont la périphérie extérieure peut être reliée à la paroi.

16. Dispositif selon au moins l'une des revendications 1 à 14, **caractérisé en ce que**, dans la surface extérieure des éléments de tronçon de liaison (4a ; 4b), est réalisé un profil à l'aide duquel une ouverture de paroi, munie d'un profil correspondant, peut être isolée de façon étanche avec une liaison par ajustement de forme.

17. Procédé pour maintenir, guider et, en particulier, faire passer un objet allongé tel qu'un tronçon de ligne, à l'aide d'un dispositif divisé, l'objet allongé étant introduit dans un tronçon de pressage d'une première partie du dispositif, la deuxième partie du dispositif étant reliée à la première partie en entourant le tronçon de ligne, et une zone périphérique du dispositif étant reliée avec effet d'étanchéité à la zone environnante d'une ouverture de paroi, **caractérisé en ce que** les éléments de tronçon (4a ; 4b) du dispositif divisé sont de forme stable (rigidité au gauchissement) et sont reliés ensemble de façon étanche aux fluides.

18. Procédé selon la revendication 17, **caractérisé en ce qu'**une pression est exercée sur l'objet allongé maintenu entre les éléments de pressage, à l'aide des éléments de tronçon de pressage (2a ; 2b) reliés ensemble.

19. Procédé selon la revendication 18, **caractérisé en ce que** la pression est appliquée par le fait que le diamètre du tronçon de ligne présente un surdimensionnement eu égard au diamètre libre du canal de passage (5) réalisé entre les deux éléments de pressage.

20. Procédé selon la revendication 18 ou 19, **caractérisé en ce que** la pression est appliquée par le fait que le tronçon de ligne est muni, dans la zone des éléments de pressage, d'un enveloppement de pourtour (50 ; 50') afin d'augmenter son diamètre.

21. Procédé selon la revendication 18 ou 19, **caractérisé en ce qu'**une masse d'étanchéité, de préférence en butyl, qui augmente le diamètre du tronçon de ligne, est prévue entre les brins ou les conducteurs du tronçon de ligne.

22. Procédé selon la revendication 18 et 19, **caractérisé en ce que** dans le tronçon de ligne est insérée au moins une pièce de remplissage, afin d'augmenter son diamètre.

23. Procédé selon la revendication 18 ou 19, **caractérisé en ce que** la pression est exercée à l'aide d'un matériau flexible ou semi-flexible, tel que EPDM/TPE, qui est prévu dans au moins une partie de la paroi du canal de passage (5).

24. Procédé selon au moins l'une des revendications de procédé précédentes, **caractérisé en ce que** le diamètre d'un tronçon de ligne est réglé à l'aide d'au moins un indicateur de niveau de remplissage servant d'élément élastique de centrage (8).
